(19) Europäisches Patentamt / European Patent Office / Office européen des brevets

(11) **EP 3 009 866 B1**

(12) **EUROPEAN PATENT SPECIFICATION**

(45) Date of publication and mention
of the grant of the patent:
**04.05.2022 Bulletin 2022/18**

(21) Application number: **14884962.3**

(22) Date of filing: **05.03.2014**

(51) International Patent Classification (IPC):
*G01V 3/10* (2006.01)    *H02J 50/60* (2016.01)
*H02J 7/00* (2006.01)    *H02J 50/12* (2016.01)

(52) Cooperative Patent Classification (CPC):
**H02J 50/12; G01V 3/10; H02J 7/00302; H02J 50/60**

(86) International application number:
**PCT/JP2014/001211**

(87) International publication number:
**WO 2015/132818 (11.09.2015 Gazette 2015/36)**

(54) **FOREIGN OBJECT DETECTOR, POWER TRANSMITTER, POWER RECEIVER, AND WIRELESS POWER TRANSMISSION SYSTEM**

FREMDKÖRPERDETEKTOR, STROMSENDER, STROMEMPFÄNGER UND DRAHTLOSES STROMÜBERTRAGUNGSSYSTEM

DÉTECTEUR DE CORPS ÉTRANGER, ÉMETTEUR D'ÉNERGIE, RÉCEPTEUR D'ÉNERGIE, ET SYSTÈME D'ÉMISSION D'ÉNERGIE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2016 Bulletin 2016/16**

(73) Proprietor: **Panasonic Intellectual Property Management Co., Ltd.**
**Osaka-shi, Osaka 570-6207 (JP)**

(72) Inventors:
• **ASANUMA, Kenichi**
 **Osaka-shi, Osaka 540-6207 (JP)**
• **YAMAMOTO, Atsushi**
 **Osaka-shi, Osaka 540-6207 (JP)**
• **YAMAMOTO, Hiroshi**
 **Osaka-shi, Osaka 540-6207 (JP)**

(74) Representative: **Grünecker Patent- und Rechtsanwälte**
**PartG mbB**
**Leopoldstraße 4**
**80802 München (DE)**

(56) References cited:
WO-A1-2012/132818    JP-A- 2005 140 701
JP-A- 2012 213 270    US-A- 4 678 992
US-A- 4 839 602    US-A- 5 180 978
US-A- 6 014 022    US-A1- 2014 001 881

**Description**

**TECHNICAL FIELD**

The present disclosure relates to a foreign object detector for detecting a foreign object which is present in a vicinity of a coil. The present disclosure also relates to a power transmitter, power receiver, and wireless power transmission system which include such a foreign object detector and which are designed for wireless power transmission, i.e., transmission of electric power in a contactless manner.

**BACKGROUND ART**

In recent years, development of wireless power transmission technology which employs induction coupling between coils has been encouraged for the purpose of charging, by wireless, electronic devices and EV devices which involve mobility, such as mobile phones and electric vehicles. A wireless power transmission system includes a power transmitter which has a power transmitting coil (power transmitting antenna) and a power receiver which has a power receiving coil (power receiving antenna) and is configured such that a magnetic field produced by the power transmitting coil is caught by the power receiving coil, whereby transmission of electric power is realized without direct contact of electrodes.
Patent Document 1 discloses an example of such a wireless power transmission system.

**CITATION LIST**

**PATENT LITERATURE**

Patent Document 1: Japanese Laid-Open Patent Publication No. 2012-244732
US 4,839,602 A relates to a metal particle detector in a tobacco filler. The inductor coil is located in the negative feedback loop which is biased by (a single) capacitor 21 to produce an output signal oscillating above baseline (DC component) of +5 Volts under nominal conditions. Further, a buffer transistor 56 is prescribed to convert the output signal of the oscillator circuit into a sinusoidal signal with respect to a +12 volt source.
US 4,678,992 A relates to a metal detector comprising an oscillator. The sensor includes a sensing coil connected in parallel with a capacitor and the oscillator is a two transistor oscillator consisting of two inverting transistors. Further, the amplification of amplifier is determined by the ratio of the negative feedback resistor and the series input resistor, where the level of amplifier gain influences the detector sensitivity.
US 6,014,022 A relates to a proximity sensing circuit with a proximity sensor coil in a feedback loop of an amplifier. Further, the output of the amplifier is combined with a first and second waveform from first and second source and then supplied to a filter 32 and then to inverter.
US 5,180,978 A relates to a proximity sensor for directly measuring parameters of a proximity sensor coil determining both the AC and DC resistances of the coil. Signal line connects the microprocessor to the output of buffer for the purpose of receiving a signal that is representative of the AC voltage of the sensor coil which allows the calculation of AC resistance. The AC resistance, in association with the DC resistance, permits the microprocessor to perform the calculation to mathematically determine discriminator value magnitude.
JP 2012-213270 A relates to a non-contact power supply system, which comprises a primary coil for power supply; a secondary coil; a first electrode provided in a power supply device and placed opposite to a load device; a second electrode provided in a load device and placed opposite to the first electrode; an AC power supply for supplying voltage for detection to the second electrode to detect electrostatic capacity produced by oppositely placing the first electrode and the second electrode each other; an IV conversion circuit connected to the first electrode and for detecting the electrostatic capacity; and a determination unit for determining whether there is metal or not between the first electrode and the second electrode based on the electrostatic capacity detected by the IV conversion circuit. US 2014/001881 A1 relates to a detector determining the variation of a Q value in a circuit comprising a coil. The Q value of the circuit is determined as the voltage between the power transmitting coil and the capacitor that compose a series resonant circuit is V1, and a voltage across the power transmitting coil is V2. These two voltages V1 and V2 are rectified by rectifying sections and thereafter analog-digital converter by ADC.

**SUMMARY OF INVENTION**

**TECHNICAL PROBLEM**

In the wireless power transmission system, when a metallic foreign object is present in a vicinity of the power transmitting coil or the power receiving coil in transmission of electric power, an eddy current occurs in the metallic foreign object, leading to the risk of heating the foreign object. Also, when a human body is present in a vicinity of the power transmitting coil or the power receiving coil during transmission of electric power, there is a risk of causing an induced current in the human body. Therefore, detection of a foreign object, such as a metallic object or human body, in a vicinity of the coil is an indispensable function for achieving safe and highly efficient wireless power transmission.

In view of the above problem, Patent Document 1 discloses measuring the primary-side Q factor of a circuit that includes a primary-side coil which is electromagnetically coupled with a secondary-side coil, correcting the power transmission efficiency with the Q factor of the primary-side coil, and detecting the state of being electromagnetically coupled with the secondary-side coil based on a resultant correction value.

However, the method of Patent Document 1 has the problem of low foreign object detection sensitivity because an AC voltage is used for measurement of the Q factor and only the variation of the AC component is considered as an index for detection of foreign objects in a vicinity of the coil.

An embodiment of the present disclosure provides a foreign object detector which is capable of detecting a foreign object, such as a metallic object or human body, in a vicinity of a coil with high sensitivity. Other embodiments of the present disclosure provide a power transmitter and a power receiver for wireless power transmission, and a wireless power transmission system, which include such a foreign object detector.

## SOLUTION TO PROBLEM

In order to solve the above-described problems, a foreign object detector is suggested according to one of the independent claims. Advantageous embodiments are covered in the dependent claims.

The invention is defined by the features of the independent claims. Embodiments 1-3 which are not falling under the scope of the independent claims are for illustrational purposes only.

## ADVANTAGEOUS EFFECTS OF INVENTION

According to an embodiment of the present disclosure, the variation of the AC component (positive cycle and/or negative cycle) of a voltage which occurs when a foreign object, such as a metallic object or human body, is present in a vicinity of a coil and, in addition, the variation of the DC component are detected, so that the foreign object which is present in a vicinity of the coil can be detected with high sensitivity.

## BRIEF DESCRIPTION OF DRAWINGS

FIG. **1** is a circuit diagram showing a general configuration of a foreign object detector according to Embodiment 1 of the present disclosure.

FIG. **2** is a diagram showing an example of the variation over time of output voltage Vin_X at an output terminal X of an oscillator circuit 100.

FIG. **3** is a circuit diagram showing a general configuration of a foreign object detector according to Embodiment 2 of the present disclosure.

FIG. **4A** is a circuit diagram showing a general configuration of an oscillator circuit in a foreign object detector according to Embodiment 3 of the present disclosure.

FIG. **4B** is a diagram showing the first connection example between terminals **A** and **B** in the oscillator circuit.

FIG. **4C** is a diagram showing the second connection example between terminals **A** and **B** in the oscillator circuit.

FIG. **4D** is a diagram showing the third connection example between terminals **A** and **B** in the oscillator circuit.

FIG. **4E** is a diagram showing the fourth connection example between terminals **A** and **B** in the oscillator circuit.

FIG. **5** is a circuit diagram showing an example of the general configuration of an oscillator circuit in a foreign object detector according to Embodiment 4 of the present disclosure.

FIG. **6** shows diagrams for illustrating the first circuit example and its operation in Embodiment 4. FIG. **6(a)** shows a circuit configuration. FIG. **6(b)** shows an example of the variation over time of voltage Vin_X at a point **X**. FIG. **6(c)** shows an example of the variation over time of voltage Vin_X which occurs when a metallic foreign object is present in a vicinity of a coil **110**.

FIG. **7** shows diagrams for illustrating the second circuit example and its operation in Embodiment 4. FIG. **7(a)** shows a circuit configuration. FIG. **7(b)** shows an example of the variation over time of voltage Vin_X' at a point X'. FIG. **7(c)** shows an example of the variation over time of voltage Vin_X' which occurs when a metallic foreign object is present in a vicinity of the coil **110**.

FIG. **8** shows diagrams for illustrating the third circuit example and its operation in Embodiment 4. FIG. **8(a)** shows a circuit configuration. FIG. **8(b)** shows an example of the variation over time of voltage Vin_X' at a point **X'**. FIG. **8(c)** shows an example of the variation over time of voltage Vin_X' which occurs when a metallic foreign object is present in a vicinity of the coil **110**.

FIG. **9** is a diagram showing a variation of Embodiment 4.

FIG. **10** is a circuit diagram showing a general configuration of a foreign object detector according to Embodiment 5 of the present disclosure.

FIG. **11** is a block diagram showing a general configuration of a wireless power transmission system according to Embodiment 6 of the present disclosure.

FIG. **12** is a flowchart showing an example of a process of a power transmitter in Embodiment 6.

FIG. **13** is a block diagram showing a general configuration of a wireless power transmission system according to Embodiment 7 of the present disclosure.

FIG. **14** is a flowchart showing an example of a process of a power receiver in Embodiment 7.

FIG. **15** is a table showing measurement results in the first example of the present disclosure.

FIG. **16A** is a graph showing simulation results in the second example of the present disclosure.

FIG. **16B** is a graph showing simulation results in the second example of the present disclosure.

## DESCRIPTION OF EMBODIMENTS

As described above, in the wireless power transmission system, it is necessary to surely detect a foreign object, such as a metallic object or human body (including animal body), in a vicinity of the coil. In view of this demand, among conventional detecting circuits represented by Patent Document 1, a determination method that considers the variation of the AC component of the oscillation voltage which occurs when a metallic foreign object is present in a vicinity of a coil has been a major solution. In an embodiment of the present application, an oscillator circuit is configured such that the DC component of the oscillation voltage varies as well as the AC component when a foreign object is present in a vicinity of a coil, and a measurement circuit which is capable of measuring both the variation of the AC component and the variation of the DC component is used. Such a configuration enables detection of a foreign object which is present in a vicinity of the coil with high sensitivity in an embodiment of the present disclosure. According to other embodiments of the present disclosure, a power transmitter and a power receiver for wireless power transmission, and a wireless power transmission system, which include such a foreign object detector, can be realized.

Hereinafter, specific embodiments are described with reference to the drawings. Note that equivalent components are denoted by the same reference numerals.

(Embodiment 1)

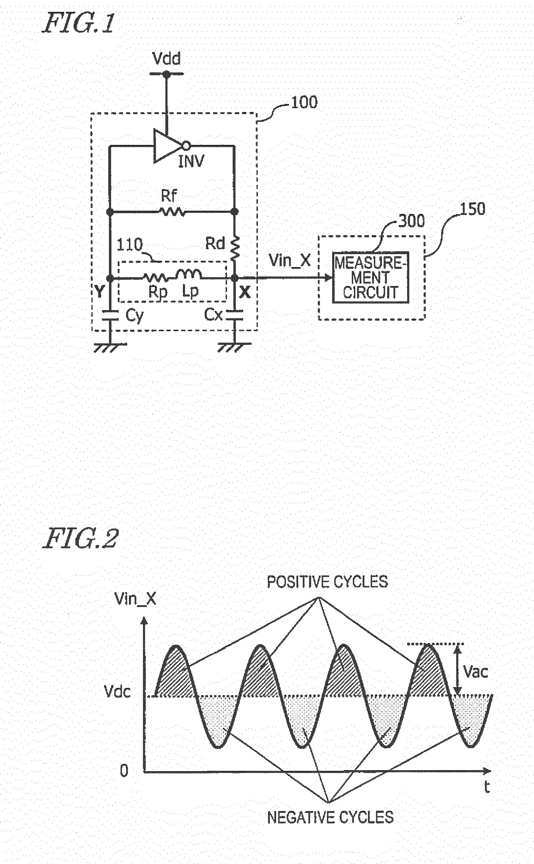

FIG. 1 is a circuit diagram showing a general configuration of a foreign object detector according to Embodiment 1 of the present disclosure. This foreign object detector can be used in, for example, a power transmitter or power receiver of a wireless power transmission system, for the purpose of detecting the presence of a foreign object, such as a metallic object or human body (including animal body), in a vicinity. The foreign object detector includes an oscillator circuit 100 that is configured to output a voltage that oscillates at predetermined cycles and an electric circuit 150 that includes a measurement circuit 300 for measuring a voltage output from the oscillator circuit 100. The oscillator circuit 100 includes a coil 110 and resonant capacitors Cx, Cy and is configured to output a voltage which includes an AC component, including positive cycles and negative cycles, and a DC component (also herein referred to as "DC voltage"). The variation of this voltage is measured by the measurement circuit **300**, whereby the presence of a foreign object, such as a metallic object or human body, in a vicinity of the coil **110** and the resonant capacitors **Cx, Cy** can be detected. Hereinafter, the description focuses on detection of a metallic foreign object.

FIG. **2** is a diagram showing an example of the variation over time of output voltage Vin_X (hereinafter, also referred to as "oscillation waveform") from an output terminal **X** during oscillation of the oscillator circuit **100** for a foreign object detection operation. In the circuit configuration shown in FIG. **1**, voltage Vin_X has a sinusoidal waveform whose oscillation center is at a certain voltage Vdc. In voltage Vin_X, voltage Vdc of the oscillation center is referred to as "DC voltage". Thus, in this specification, the term "DC voltage" refers not only to a voltage whose polarity does not vary with time but also to a "DC component" included in a certain voltage. In voltage Vin_X, a cycle during which the voltage is larger than voltage Vdc is referred to as "positive cycle", and a cycle during which the voltage is smaller than voltage Vdc is referred to as "negative cycle". The output waveform of this oscillator circuit is merely exemplary. The waveform of the above-described output voltage includes all of periodically-varying waveforms, such as triangular waves and square waves.

The oscillator circuit **100** includes an inverter **INV** and resistances **Rf, Rd** in addition to the coil **110** and the resonant capacitors **Cx, Cy**. The inverter **INV** is a circuit component which is configured to amplify an input waveform based on electric power supplied from an unshown power supply. The resistance **Rf** and the resistance **Rd** of the oscillator circuit **100** are elements configured to adjust the excitation level of the circuit. One electrode of the resonant capacitor **Cx** is connected to the output terminal of the coil **110** and the oscillator circuit **100** (a terminal connected to an electronic circuit **150**). The two resonant capacitors **Cx**, **Cy** are connected in parallel to the coil **110**. One electrode of each of the resonant capacitors **Cx**, **Cy** is grounded.

The measurement circuit **300** is configured to output information indicating that a metallic foreign object is present when the voltage output from the oscillator circuit **100** is not more than a predetermined threshold. This information indicative of the detection result can be, for example, output to an unshown display device or transmitted to a control circuit of the wireless power transmission system for use in control of power transmission. Examples of such control will be described later in the sections of Embodiments 6 and 7. The measurement circuit 300 can be realized by, for example, an analog-digital conversion circuit (ADC) or comparator, or a microcontroller unit (MCU) or digital signal processor (DSP) including such components.

Hereinafter, the operation principle of the foreign object detector of the present embodiment is described in more detail with reference to FIG. **1** and FIG. **2**.

First, in FIG. **1**, as an example of the oscillator circuit **100**, a gate oscillator circuit which operates on supply voltage Vdd is used. The foreign object detector takes out the output voltage from the node **X** of the coil **110** and the capacitor **Cx** and measures the output voltage using the measurement circuit **300**. The measurement circuit **300** is capable of measuring the voltage in the range of 0≤Vout<Vcc.

The measurement circuit **300** of the present embodiment is a circuit component included in the electric circuit **150**. The electric circuit **150** detects, by the measurement circuit **300**, the variation of the AC component including positive cycles and negative cycles and the variation of the DC component in the voltage output from the oscillator circuit **100**. Here, the "variation" includes every type of variation in the waveform, such as decrease and increase in amplitude of the oscillation waveform and deformation of the waveform.

When the oscillator circuit **100** oscillates and reaches a steady state, the polarity of the cycles of the oscillation waveform varies at angular frequency ω with the passage of time t. Thus, voltage Vin_X at the node **x** is represented by formula (1) as follows:

$$\text{Vin\_X} = \text{Vdc(Q)} + \text{Vac(Q)} \times \sin(\omega t) \quad (1)$$

Here, t is the time, ω is the angular frequency of the oscillation waveform, Vdc is the DC voltage which varies depending on the Q factor, and Vac is the amplitude value of the oscillation waveform which varies depending on the Q factor. As shown in FIG. **2**, periods of Vac(Q)×sin(ωt)>0 are positive cycles, and periods of Vac(Q)×sin(ωt)<0 are negative cycles. When a CMOS inverter is used for the inverter **INV**, Vdc is usually lower than Vdd/2 due to variations in the semiconductor and losses, although Vdc = Vdd/2 holds under ideal conditions. In this configuration example of the oscillator circuit **100**, when a metallic foreign object approaches the coil **110**, the Q factor of a resonant circuit consisting of the coil **110** and the resonant capacitors **Cx**, **Cy** decreases, and accordingly, the stability of the oscillator circuit decreases, and Vdc and Vac also decrease. That is, the AC component including positive cycles and negative cycles and the DC component vary.

One of examples of the method for measuring amplitude value Vac and DC voltage Vdc uses an ADC which has a sufficient sampling rate as compared with the period of the oscillation waveform. For example, output waveform Vin_X of the oscillator circuit 100 is directly sampled, and Vac and Vdc can be digitally calculated by the operations of the following formulae:

$$\text{Vac} = (\max(\text{Vin\_X}) - \min(\text{Vin\_X})) \div 2 \quad (2)$$

$$\text{Vdc} = \text{avg}(\text{Vin\_X}) \quad (3)$$

Here, max(·) is the maximum of measured values, min(·) is the minimum of measured values, and avg(·) is the average for measured values from one period of the oscillation waveform.

One of examples of the method for analog measurement of amplitude value Vac of the oscillation waveform uses a peak hold circuit. One of examples of the method for analog measurement of DC voltage Vdc uses a low pass filter. Another example method is a contactless measurement method in which a magnetic sensor, such as a Hall element, is provided near the node **X** of the oscillator circuit **100**, and a resultant output voltage is amplified.

Major conventional sensing methods focus on a variation in amplitude value Vac of the AC voltage which occurs when a metallic foreign object is present in a vicinity of the coil. According to the present application, the oscillator circuit **100** is configured such that not only the AC component but also the DC component vary when a metallic foreign object is present in a vicinity of the coil, and the oscillator circuit **100** includes a measurement circuit which is capable of measuring the variations of Vac and Vdc, and hence, a foreign object can be detected with high sensitivity as compared with conventional methods. Specific degrees of improvement in the sensing sensitivity will be described later in the section of Example 1.

Note that, in FIG. 1, the above-described range of the output voltage can also be further expanded by selecting different values for the capacitances of the capacitors **Cx**, **Cy**. Specifically, where the capacitance of the resonant capacitor **Cx** connected to the node **X** shown in FIG. 1 is Cx, the voltage is Vx, the capacitance of the resonant capacitor **Cy** connected to the node **Y** is Cy = $\alpha$Cx, and the voltage is Vy, Vx = $\alpha$|Vy| holds. Therefore, voltage Vin_X input to the electric circuit **150** is equal to $\alpha$ times Vy. In the case where the oscillation voltage of the oscillator circuit 100 is not sufficiently large, or in the case where the range of a voltage which can be measured by the measurement circuit **300** is greater than that of the supply voltage of the oscillator circuit **100**, the voltage input to the measurement circuit **300** can be increased by unbalancing the ratio between the capacitances of the above-described capacitors. The range set for $\alpha$ can be, for example, $1 \leq \alpha \leq 100$, including the case of Cx = Cy. When, on the contrary, voltage Vin input to the measurement circuit **300** is desired to be low, $\alpha$ can be set to, for example, a value within the range of $0.01 \leq \alpha < 1$. If the balance between Cx and Cy is excessively disturbed, the stability of oscillation will deteriorate. Therefore, the afore-mentioned value of $\alpha$ needs to be appropriately selected according to the system configuration.

Other examples of the oscillator circuit **100** than the gate oscillator circuit such as shown in FIG. **1** include known oscillator circuits which base on the LC resonance principle, such as Colpitts oscillator circuits, Hartley oscillator circuits, Clapp oscillator circuits, and Franklin oscillator circuits. The oscillator circuit **100** may include at least one coil and at least one resonant capacitor which constitute a resonant circuit and may be configured to output a voltage which includes positive cycles, negative cycles, and a DC voltage.

The damping resistance **Rd** is set to an appropriate value according to other circuit constants or the detection performance of the measurement circuit **300**. For example, the damping resistance **Rd** can be set such that when a metallic foreign object is sufficiently distant from the coil **110,** voltage Vout input to the measurement circuit **300** is within the measurable range of the measurement circuit **300,** and that when a metallic foreign object which is greater than the coil **110** is in close contact with the coil **110,** voltage Vout is not less than the lower limit of the measurable range.

Note that although in the example shown in FIG. 1 the damping resistance Rd is connected to the output stage of the oscillator circuit **100** (between the inverter **INV** and the node **X**), it may be connected at any other position. The damping resistance **Rd** may be placed at the input stage, the output stage, or an arbitrary position in both of these stages so long as it is positioned such that the voltage output from the oscillator circuit **100** decreases.

(Embodiment 2)

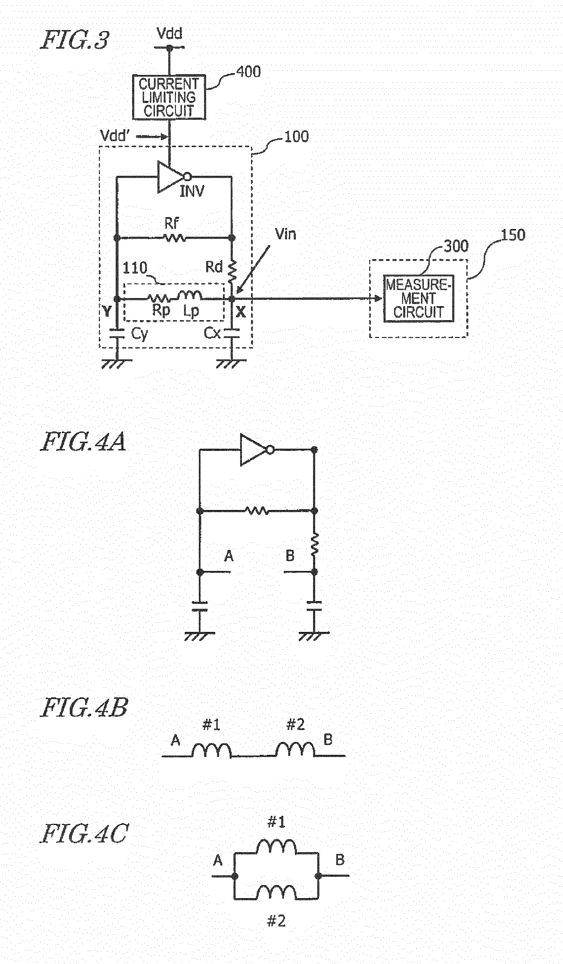

FIG. **3** is a circuit diagram showing a general configuration of a foreign object detector according to Embodiment 2 of the present disclosure. The present embodiment is different from Embodiment 1 in that a current limiting circuit **400** is further provided between an amplifying part (amplifier circuit) of the oscillator circuit **100** and the power supply **Vdd**. This configuration enables the amplitude of the positive cycles, the amplitude of the negative cycles, and the DC voltage in voltage Vin output from the oscillator circuit **100** to further vary when a foreign object is present in a vicinity.

Usually, the power supply of the amplifying part of the oscillator circuit does not include the current limiting circuit **400.** Therefore, when an energy loss occurs due to the presence of a foreign object in a vicinity of the coil, decrease of the oscillation voltage occurs. In that case, the amplifying part of the oscillator circuit operates to amplify the power such that the lost energy is recovered and the oscillation continues. When the supply voltage of the amplifier circuit is constant, the current is increased for recovery of the lost energy, and the value of the current flowing from the power supply into the amplifier circuit increases.

In the present embodiment, the current limiting circuit **400** is connected between the power supply and the amplifying part, such that the upper limit of the value of the current flowing into the amplifying part can be set irrespective of the presence/absence of a foreign object in a vicinity. In this case, for the purpose of sustaining the oscillation, the oscillator circuit **100** operates to decrease supply voltage Vdd' of the amplifying part such that the energy loss caused by a foreign object approaching the coil is reduced. As a result, this leads to concurrent decrease of the three components, the voltage of the positive cycles, the voltage of the negative cycles, and the DC voltage, and the measurement circuit **300** can detect decrease of these voltages. According to the principle described hereinabove, the presence of a foreign object in a vicinity can be detected with higher sensitivity.

(Embodiment 3)

FIGS. **4A** to **4E** are circuit diagrams showing a general configuration of an oscillator circuit in a foreign object detector according to Embodiment 3 of the present disclosure. The present embodiment is different form Embodiment 1 in that the oscillator circuit includes a plurality of coils. Hereinafter, the description focuses on the differences from Embodiment 1.

In the case of expanding the sensing area, the sensing area can be expanded in space and plane by arranging a plurality of coils. However, there is a problem that providing an oscillator circuit for each coil leads to increase in cost and increase in circuit area. In view of such, in the present embodiment, as shown in FIG. **4A,** a plurality of coils are connected between terminals **A** and **B**, with the terminals **A** and **B** being employed as the connecting points to the oscillator circuit. Hereinafter, some possible connection examples are described.

FIG. **4B** shows a configuration example where two coils, coil #1 and coil #2, are connected in series. When a plurality of coils are connected in series, the total inductance is large as compared with a case where a single coil of the same specifications is used. Therefore, there is an advantage that, in the case where the oscillation frequency is desired to be fixed, the capacitance of the resonant capacitor can be decreased. The time constant before the oscillation becomes stable is determined by the product of the capacitance of the resonant capacitor and the damping resistance. Therefore, there is another advantage that, due to the decrease of the capacitance of the resonant capacitor, the time before the start of the oscillation can be shortened.

FIG. **4C** shows a configuration example where two coils, coil #1 and coil #2, are connected in parallel. When a plurality of coils are connected in parallel, the total inductance is small as compared with a case where a single coil of the same specifications is used. Therefore, there is an advantage that, in the case where the capacitance of the resonant capacitor is desired to be fixed, the oscillation frequency can be set high. Since the surface skin depth of the a foreign object decreases as the oscillation frequency becomes higher, the eddy current loss also increases. Therefore, there is an outstanding advantage that sensing with still higher sensitivity can be realized.

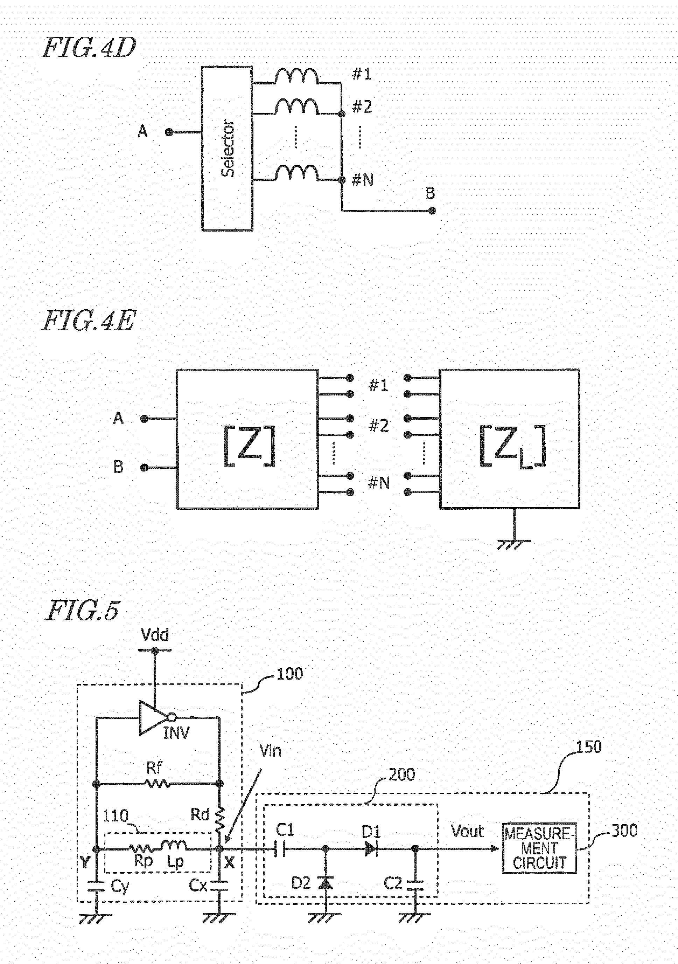

FIG. **4D** shows a configuration example where a plurality of coils, coil #1 to coil #N, and a selector (multiplexer or switch) are connected between terminals **A** and **B.** By using the selector to select at least one of the plurality of coils, it can be determined which of the coils is present in a vicinity of a foreign object. For example, in the case where the foreign object detector is placed on a power transmitter (e.g., battery charger cradle) in the wireless power transmission system and a metallic foreign object is placed on that power transmitter, a coil which is present in a vicinity of that foreign object can be determined. Therefore, there is an advantage that, in the case where coils for detection of foreign objects are configured to also function as power transmitting coils, coils other than a coil for which the presence of a foreign object in a vicinity is detected can be used for safely achieving power transmission. Even in the case of a configuration where coils for detection of foreign objects and power transmitting coils are separately provided, there is an advantage that a coil for power transmission which is at a position distant from a coil for which the presence of a foreign object in a vicinity is detected can be selected for safely achieving power transmission.

FIG. **4E** is a block diagram showing a generalized configuration of the present embodiment. The electric characteristics of N coils can be expressed by an N×N impedance matrix **Z** including the self-impedance and the mutual impedance, and can be realized by a model where impedance matrix $\mathbf{Z_L}$ (including capacitors, inductors, resistances, and openings and short circuits) is connected at the tips of N coil terminals. Although details are not described herein because they could depart from the purport of the present disclosure, even in the case of a plurality of coils, basically, there is an advantage that high sensitivity sensing of a foreign object which covers a large target sensing area can be realized no matter what coil arrangement is employed so long as connecting terminals are drawn out such that the portion between the terminals **A** and **B** appears inductive.

(Embodiment 4)

FIG. **5** is a circuit diagram showing an example of the general configuration of a foreign object detector according to Embodiment 4 of the present disclosure (the third circuit example which will be described later). The present embodiment is different from Embodiment 1 in that a rectifier circuit **200** is further provided between an output point **X** of the oscillator circuit **100** and the measurement circuit **300**. In the configuration example of FIG. **5**, the rectifier circuit **200** and the measurement circuit **300** constitute the electric circuit **150**. Note that although the foreign object detector of the present embodiment includes the measurement circuit **300**, the measurement circuit **300** may be an external element which is connected to the foreign object detector for use.

The rectifier circuit **200** includes a first rectifying element **D1** for rectifying the voltage of positive cycles in voltage Vin output from the oscillator circuit **100**, a first capacitor **C1** for decreasing the DC voltage, a second rectifying element **D2** for rectifying the voltage of negative cycles which is smaller than zero (0) due to decrease of the DC voltage, and a second capacitor **C2** for smoothing the voltage output from the first rectifying element **D1**. The rectifying elements **D1**, **D2** can be realized by using semiconductor elements, such as diodes and transistors.

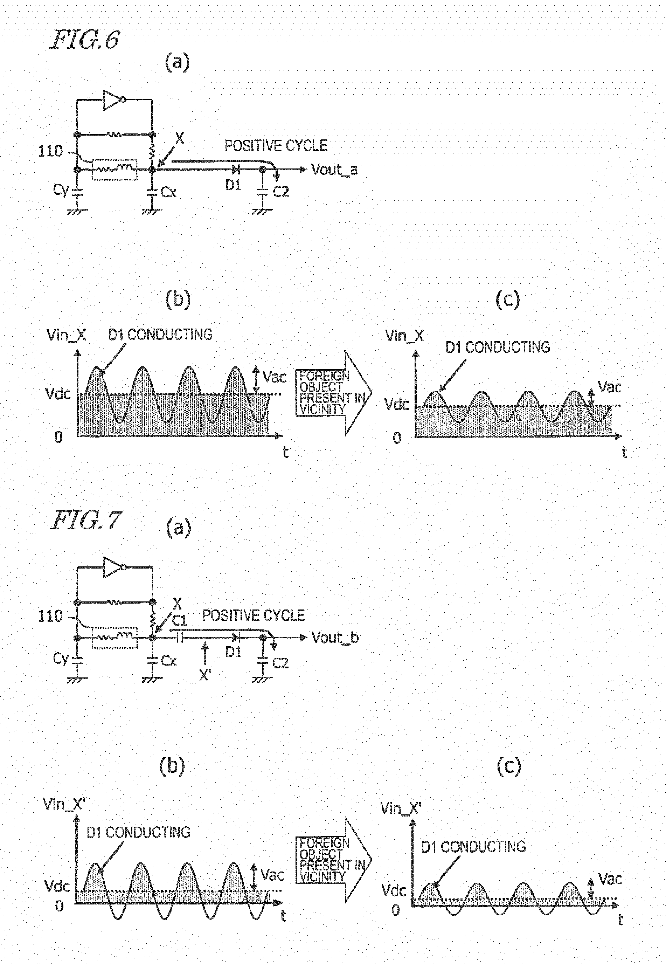

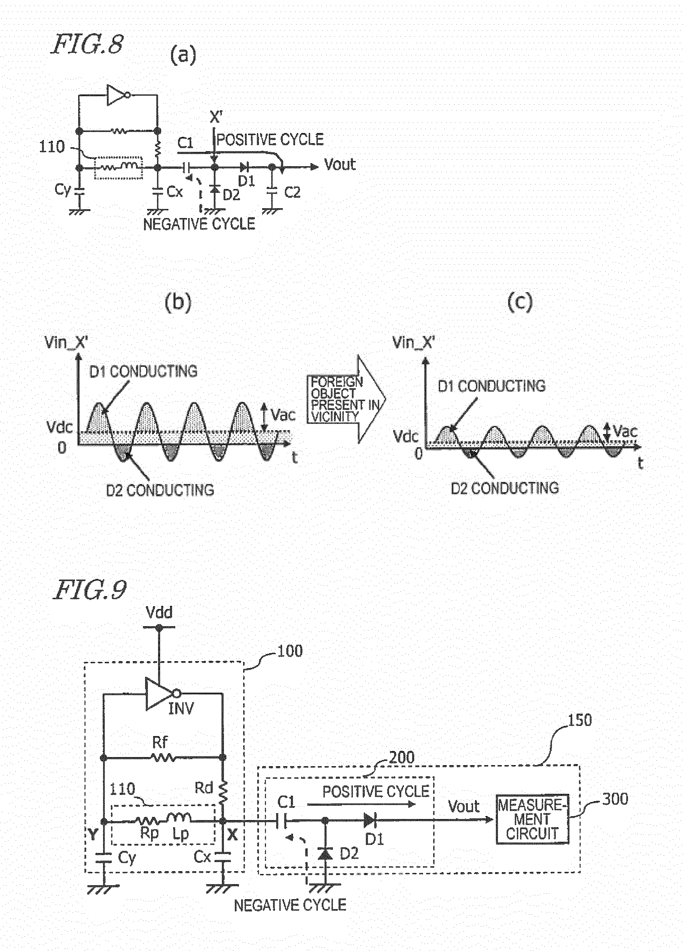

FIG. **6** to FIG. **8** are diagrams (circuit examples) for illustrating the configuration and operation of the foreign object detector of the present embodiment. Hereinafter, the operation principle of the foreign object detector of the present embodiment is described in more detail with reference to FIG. **6** to FIG. **8**. FIG. **6** shows the first circuit example. FIG. **7** shows the second circuit example. FIG. **8** shows the third circuit example. The configuration shown in FIG. **8** is the best configuration of the present embodiment.

The summary of common operations among all of the configurations of FIG. **6** to FIG. **8** is now described. In these examples, a gate oscillator circuit which operates on supply voltage Vdd is used as an example of the oscillator circuit **100**. The foreign object detector takes out the output voltage from the node **X** of the coil **110** and the capacitor **Cx**, allows the output voltage to flow through the rectifying element **D1** and to be smoothed by the capacitor **C2**, and measures voltage Vout from the output terminal (Vout_a of FIG. **6** or Vout_b of FIG. **7**) using the measurement circuit **300**. The measurement circuit **300** is capable of measuring the voltage in the range of 0≤Vout<Vcc.

Next, circuit examples of the rectifier circuit **200** are described in the order of FIG. **6** to FIG. **8**.

The first circuit example shown in FIG. **6(a)** is a half-wave rectifier circuit which includes a diode (rectifying element) **D1**. FIG. **6(b)** shows an example of the variation over time of voltage Vin_X at the node **X**. FIG. **6(c)** shows an example of the variation over time of voltage Vin_X which occurs when a metallic foreign object approaches the coil **110**. The diode **D1** mainly rectifies the voltage of positive cycles and the DC voltage during oscillation of the oscillator circuit **100**. Therefore, variations in voltage which result from a variation of the Q factor of the resonant circuit which is caused by the presence of the a metallic foreign object in a vicinity mainly occur in positive cycles of the AC voltage and in the DC voltage. The final range of output voltage Vout_a is Vdd/2≤Vout_a<Vdd when forward voltage VF of the diode **D1** and the like are ignored. Therefore, in the case of supply voltage Vdd = Vcc, there is an advantage that high sensitivity sensing can be realized using a small number of components, although the operation over the entire range of 0≤Vout<Vcc, which is the measurable range of the measurement circuit, is impossible.

The second circuit example shown in FIG. **7(a)** is a rectifier circuit which has a configuration realized by adding a capacitor **C1** to the half-wave rectifier circuit of the first circuit example (FIG. **6**). The capacitor C1 is connected in series between the node **X** and the diode **D1**. FIG. **7(b)** shows an example of the variation over time of voltage Vin_X' at a point **X'** between the capacitor **C1** and the diode **D1**. FIG. **7(c)** shows an example of the variation over time of voltage Vin_X' which occurs when a metallic foreign object approaches the coil **110**. Output voltage Vout_b of this circuit has a relationship with output voltage Vout_a of the rectifier circuit shown in FIG. **6**. This relationship is represented by the following formula (4):

$$\text{Vout\_b} = \text{C1}/(\text{C1+C2}) \times \text{Vout\_a} \qquad (4)$$

That is, the capacitor **C1** cooperates with the smoothing capacitor **C2** as a voltage-dividing capacitor which determines the voltage division ratio, U = C1/(C1+C2).

Therefore, in this specification, the capacitor **C1** is also referred to as "voltage-dividing capacitor". Due to the effect of this voltage-dividing capacitor **C1**, the DC voltage at the point **X'** is lower than the DC voltage at the node **X** as illustrated in FIGS. **7(b)** and **7(c)**. Note that the range of Vout_b is U×Vdd/2≤Vout_b<U×Vdd when forward voltage VF of the diode and the like are ignored because the rectifying element D1 mainly rectifies positive cycles and the DC voltage. Therefore, in the case of supply voltage Vcc = Vdd, there is another advantage that high sensitivity sensing can be realized and the power consumption by the measurement circuit can be reduced so long as it is in a low-voltage operation where the supply voltage of the measurement circuit is Vcc = U×Vdd, although the operation over the entire range of 0≤Vout<Vcc, which is the measurable range of the measurement circuit, is impossible.

The third circuit example shown in FIG. **8(a)** further includes a diode **D2** connected between the node **X'** and the ground in addition to the components of the rectifier circuit of the second circuit example (FIG. **7**). FIG. **8(b)** shows an example of the variation over time of voltage Vin_X' at the node **X'**. FIG. **8(c)** shows an example of the variation over time of voltage Vin_X' which occurs when a metallic foreign object approaches the coil **110**. Also in this circuit example, as in the second circuit example, DC voltage Vdc decreases due to the effect of the voltage-dividing capacitor **C1**, and DC voltage Vdc also decreases due to decrease of the Q factor which is caused by the approach of a foreign object. The diode **D2** has the effect of rectifying the voltage of negative cycles which is smaller than zero (0) due to decrease of the DC voltage (DC component) which is caused by the voltage-dividing capacitor **C1**. Therefore, the maximum output voltage after the rectification is 2×Vac ≈ Vdd because of synthesis of positive and negative cycle components. Note that, however, since the rectification effect of the diode **D2** decreases as the Q factor decreases, the operation mode becomes closer to the second circuit example (FIG. **7**). Thus, the minimum output voltage obtained by the rectification is U×Vdd/2. In summary, in the present embodiment, the final range of output voltage Vout is U×Vdd/2 ≤ Vout < Vdd.

The measurement circuit **300** is capable of measuring the voltage in the range of 0≤Vout<Vcc. It is understood that the sensing sensitivity to foreign objects can be maximized by decreasing voltage division ratio U. That is, by making voltage division ratio U closer to 0, the lower limit value of the output voltage, $U \times Vdd/2$, can be decreased to a value near 0 V. In order to make the lower limit value lower than that of the first circuit example (FIG. 6), it is only necessary to set U to a value which is greater than 0 and smaller than 1. In order to make the lower limit value considerably lower than that of the first circuit example, it is desirable to set U to a value which is greater than 0 and equal to or smaller than 0.5. It is more desirable to set U to a value which is equal to or greater than 0.001 and equal to or smaller than 0.5. For example, when Vdd = 5 V and U = 0.001, the range of Vout is $2.5mV \leq Vout < 5V$. If the measurement circuit 300 is an ADC which has the detection performance of, for example, 10 bits (1024 grades), it has the resolution of $5 \div 1024 \approx 4.88$ mV for 1 bit. In this case, the output range of the ADC is 1 to 1023, which means that the measurement is possible generally over the full range, and higher sensitivity of the sensing can be achieved.

As described above, the foreign object detector of the present embodiment includes the oscillator circuit **100** which includes the coil **110** and the resonant capacitors **Cx**, **Cy** and which is configured to output a voltage including positive cycles, negative cycles, and the DC voltage, and the rectifier circuit **200** which is connected to the oscillator circuit **100** and which is configured to rectify a voltage output from the oscillator circuit **100**. The rectifier circuit **200** is configured to detect the amplitude of the positive cycles, the amplitude of the negative cycles, and decrease of the DC voltage in the voltage output from the oscillator circuit **100** when a metallic foreign object approaches the coil **110**. Now, the third circuit example, which is the best configuration, is described more specifically. The rectifier circuit **200** includes the first rectifying element **D1** for rectifying the voltage of positive cycles, the first capacitor **C1** for decreasing the DC voltage, and the second rectifying element **D2** for rectifying the voltage of negative cycles which is smaller than zero (0) due to decrease of the DC voltage. The rectifier circuit **200** further includes the second capacitor **C2** for smoothing the voltage output from the first rectifying element **D1**, and is configured to meet, for example, $0<U\leq0.5$ where U is the voltage division ratio between the first capacitor **C1** and the second capacitor **C2**.

Since the above-described configuration enables to decrease the lower limit value of the voltage output from the rectifier circuit **200**, the detection performance of the measurement circuit **300** can be effectively utilized, and the detection sensitivity can be improved. According to the present embodiment, the detection sensitivity can be improved without providing an amplifier circuit at a stage previous to the measurement circuit **300**, and therefore, a foreign object detector of high sensitivity can be realized by an inexpensive circuit configuration.

Note that the foreign object detector of the present embodiment is not limited to the configurations shown in FIG. **5** to FIG. **8** but may be modified as necessary. For example, as shown in FIG. **9**, the smoothing capacitor **C2** may be omitted from the third circuit example. In this case, voltage Vout input to the measurement circuit **300** is an AC voltage, and therefore, it is necessary to use, as the measurement circuit **300**, an ADC whose sampling rate is relatively high so as to be capable of measuring the variation of the AC voltage.

The rectifier circuit **200** is not limited to the configurations shown in FIG. **5** to FIG. **9** but only needs to be configured to detect the amplitude of the positive cycles, the amplitude of the negative cycles, and decrease of the DC voltage in the voltage output from the oscillator circuit **100** when a metallic foreign object approaches the coil **110**.

(Embodiment 5)

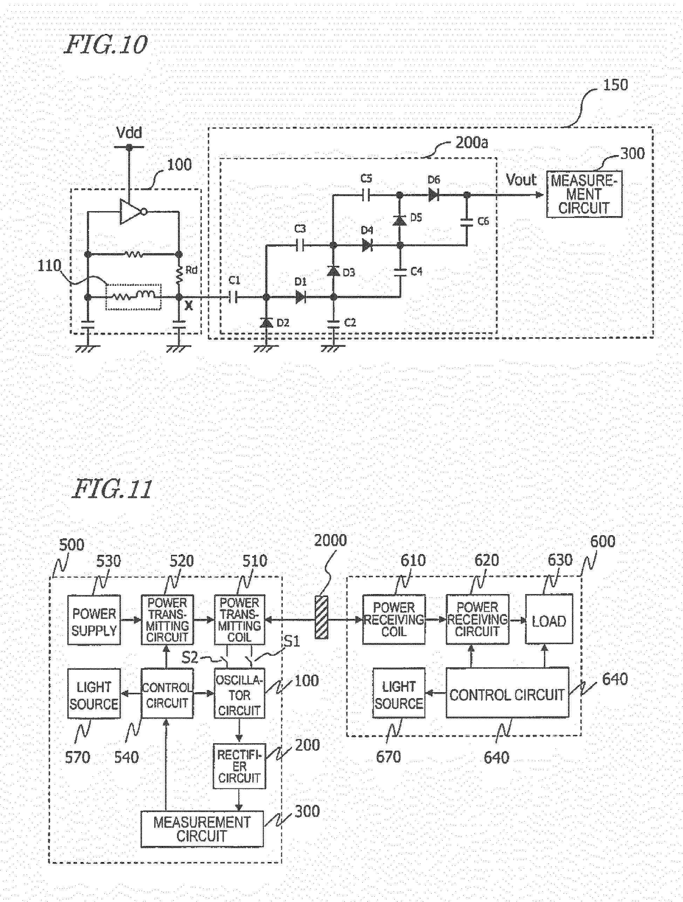

FIG. **10** is a circuit diagram showing a general configuration of a foreign object detector according to Embodiment 5 of the present disclosure. The foreign object detector of the present embodiment is different from Embodiment 4 in that a rectifier circuit **200a** corresponding to the rectifier circuit **200** of Embodiment 4 has a multi-stage configuration and that the value of the damping resistance **Rd** is increased such that voltage Vout input to the measurement circuit **300** is within the measurable range of the measurement circuit **300**. Hereinafter, only the differences from Embodiment 4 are described while descriptions of common aspects are omitted.

If the oscillation level of the oscillator circuit **100** used for detection of foreign objects is large, there is a probability that noise is radiated from coil parts, and the noise affects external electronic devices. In this case, the oscillation level can be suppressed to a low level by setting the value of the damping resistance **Rd** to a large value, such as several kilo-ohms (kΩ). However, concurrently, the sensing sensitivity to foreign objects also decreases. To solve such a problem, the rectifier circuit of the present embodiment has a multi-stage configuration such that the output voltage that can be taken out can be increased twofold, fourfold, or more. Thus, the present embodiment has such an advantage that both improvement in sensitivity and low noise level can be achieved.

(Embodiment 6)

FIG. **11** is a block diagram showing a general configuration of a wireless power transmission system according to Embodiment 5 of the present disclosure. This wireless power transmission system includes a power transmitter **500** and a power receiver **600** and is capable of transmission of electric power by wireless from the power transmitter **500** to the power receiver **600**. The power transmitter **500** can be, for example, a wireless battery charger. The power receiver **600** can be, for example, a device which includes a secondary battery, such as personal digital assistants and electric vehicles. In the present embodiment, the foreign object detector according to any of the above-described embodiments is provided on the power transmitter **500** side. Thus, the power transmitter **500** is capable not only of transmitting electric power to the power receiver **600** but also of detecting whether or not a metallic foreign object **2000** is present between a power receiving coil **610** of the power receiver **600** and the power transmitting coil **510**. The detection result can be imparted to a user in the form of, for example, optical information from a light source **570** of the power transmitter **500** or a light source **670** of the power receiver **600**. Note that it is not limited to the light sources **570**, **670**. For example, a display device, such as a display or loudspeaker, may be used to impart to a user the detection result about a foreign object in the form of optical, video, or sound information. The "display device" is not limited to a display for presenting visual information but widely includes devices for presenting only aural information (sound or voice).

Thanks to such a function of the foreign object detector included in the wireless power transmission system of the present embodiment, a user can know the presence/absence of a foreign object between the power receiving coil **610** and the power transmitting coil **510** when bringing the power receiver **600** closer to the power transmitter **500**. Thus, a safe transmission state can be secured.

Hereinafter, the configuration and operation of the present embodiment are described with an example which includes the foreign object detector of Embodiment 4 which has the rectifier circuit **200**.

As shown in FIG. 11, the power transmitter **500** of the present embodiment includes a power transmitting coil **510**, a power transmitting circuit **520**, a power supply **530**, an oscillator circuit **100**, a rectifier circuit **200**, a measurement circuit **300**, and a light source **570**. Of these components, the power transmitting coil **510**, the oscillator circuit **100**, the rectifier circuit **200**, and the measurement circuit **300** constitute the foreign object detector.

The power transmitting coil **510** corresponds to the coil **110** of the above-described embodiments and is depicted in FIG. 11 as a component which is independent of the oscillator circuit **100**. The power transmitting coil **510** and an unshown capacitor constitute a power transmission resonator. The power transmitting coil **510** transmits, by wireless, AC power supplied from the power transmitting circuit **520**. The power transmitting coil **510** used may be a thin planar coil formed by a substrate pattern, a wound coil formed by a copper wire, a litz wire, a twisted wire, or the like. In order to secure sufficient detection sensitivity, the Q factor of a coil L1 can be set to, for example, a value not less than 100 but may be set to a value smaller than 100. Note that the power transmission resonator does not need to include a capacitor if it is unnecessary. The power transmission resonator may be formed with the inclusion of the self-resonance characteristic that the coil **510** itself has.

The oscillator circuit **100**, the rectifier circuit **200**, and the measurement circuit **300** are the same as those of any of the above-described embodiments. The measurement circuit **300** detects a metallic foreign object which is present in a vicinity of the power transmitting coil **510** based on the variation of the voltage output from the rectifier circuit **200**. Then, the measurement circuit **300** imparts information indicative of that detection result to a control circuit **540** directly or indirectly via an unshown storage medium, such as a memory.

The power transmitting circuit **520** is a circuit for outputting an AC energy which is for power transmission after completion of foreign object detection. The power transmitting circuit **520** may be a full bridge inverter or any other type of power transmitting circuit such as class-D or class E circuit. The power transmitting circuit **520** may further include a modulation/demodulation circuit for data communication and/or a variety of sensors for measurement of voltages, currents, etc.

The power supply **530** includes a commercial power supply, a primary battery, a secondary battery, a solar cell, a fuel cell, a USB (Universal Serial Bus) power supply, a high-capacity capacitor (e.g., electric double layer capacitor), a voltage converter connected to the commercial power supply, or all of power supplies which can be realized by a combination thereof.

The power transmission control circuit **540** is a processor for controlling the operation of the entirety of the power transmitter **500** and can be realized by, for example, a combination of a CPU and a memory in which a computer program is stored. The power transmission control circuit **540** may be special-purpose hardware which is configured to realize the operation of the present embodiment. The power transmission control circuit **540** exercises control over switching of the oscillation frequency of the oscillator circuit **100**, control over power transmission by the power transmitting circuit **520** (adjustment of the state of power transmission), and control over light emission of the display element **570** based on the detection result from the measurement circuit **300**. Specifically, in the foreign object detection mode, the operation of the power transmitting circuit **520** is stopped, and the oscillator circuit **100** is driven. In the power transmission mode, the operation of the oscillator circuit **100** is stopped, and the power transmitting circuit **520** is driven. The power transmission control circuit **540** determines the frequency of power when starting transmission and the voltage of power to be transmitted according to the measurement result from the foreign object detector.

Other examples of the oscillator circuit **100** than the previously-described gate oscillator circuit include known oscillator circuits which base on the LC resonance principle, such as Colpitts oscillator circuits, Hartley oscillator circuits, Clapp oscillator circuits, and Franklin oscillator circuits.

The measurement circuit **300** can be, as previously described, a measuring device used for measuring the voltage output from the rectifier circuit **200**, such as an ADC. Note that, although not shown, at least part of the functions of the measurement circuit **300** and at least part of the functions of the power transmission control circuit **540** may be realized by a semiconductor package (e.g., microcontroller or custom IC).

The light source **570** is configured to impart to a user the detection result obtained by the measurement circuit **300**. The light source **570** can be realized by a light source, such as an LED or organic EL, or may be an aggregate of a plurality of light sources. The light source **570** may allow emission of different ones of the plurality of light sources, or vary stepwise the number of light sources which are allowed for emission, according to the distance between the power transmitting coil **L1** and the power receiving coil **L2** or the degree of vicinity of the a metallic foreign object. Alternatively, a display, such as a liquid crystal display device or organic EL display device, may be used instead of the light source **570**. Using the display enables displaying of the detection result in the form of images or characters. Such a display device may be configured to display the detection result by means of sound or voice together with, or instead of, light.

The power transmitter **500** can operate in two modes, "foreign object detection mode" for detection of foreign objects with the use of the foreign object detector and "power transmission mode" for transmission of electric power with the use of the power transmitting circuit **520**. The power transmitter **500** includes switches **S1**, **S2** for switching between the power transmission mode and the foreign object detection mode. The power transmission control circuit **540** controls the conduction state of the switches **S1**, **S2** such that in the foreign object detection mode the power transmitting coil **510** and the oscillator circuit **100** are electrically connected together, and in the power transmission mode the power transmitting coil **510** and the oscillator circuit **100** are electrically disconnected from each other.

The power receiver **600** includes a power receiving coil **610** for receiving at least part of the electric power transmitted from the power transmitting coil **510,** a load **630,** a power receiving circuit **620** for rectifying the received electric power and supplying the rectified electric power to the load **630**, a light source **670** for imparting the detection result for a foreign object, and a power reception control circuit **640** for controlling respective parts of the power receiver **600**.

The power receiving coil **610** and an unshown capacitor constitute a power receiving resonator. The power reception resonator is electromagnetically coupled with the power transmission resonator. The power receiving coil **610** and the capacitor may be the same as, or different from, the coil and the capacitor on the power transmission side. Note that the power receiving resonator does not need to include the capacitor if it is unnecessary. The power receiving resonator may be formed with the inclusion of the self-resonance characteristic that the coil **610** itself has.

The power receiving circuit **620** includes various circuits, such as rectifier circuit, frequency conversion circuit, constant voltage/constant current control circuit, and modulation/demodulation circuit for data communication. The power receiving circuit **620** is configured to convert the received AC energy to a DC energy or low-frequency AC energy which is usable for the load **630**. Also, various sensors for measuring the voltage, current, etc., of the power receiving resonator **610** may be included in the power receiving circuit **620**.

The load **630** is, for example, a secondary battery or a high-capacity capacitor and can be charged with the electric power output from the power receiving circuit **620**.

The power reception control circuit **640** is a processor for controlling the operation of the entirety of the power receiver **600** and can be realized by, for example, a combination of a CPU and a memory in which a computer program is stored. The power reception control circuit **640** is not limited to this example but may be special-purpose hardware which is configured to realize the operation of the present embodiment. The power reception control circuit **640** exercises control over charging of a load **650** and control of the light source **670**.

As described above, in the present embodiment, the coil for detection of foreign objects and the coil for transmission of electric power are realized by the same coil. Such a configuration enables sharing of coil parts and provides an advantage that the size of the power transmitter **500** can be reduced.

Using the power transmitting coil also as the coil for detection of foreign objects provides an advantage that the state of placement of a foreign object lying on the power transmitting coil **510** can be directly detected. This enables to adjust the power transmission frequency and the electric power to be transmitted (power transmission voltage or power transmission current) based on the voltage value measured by the measurement circuit **300**. For example, if it is determined that a foreign object is present, transmission of electric power is immediately stopped, or transmission of electric power is not started. In such a case, charging is impossible, and there is a probability that the user's convenience is marred. In view of such, even if the criterial value that is the criterion for determination as to the presence/absence of a foreign object is not more than a predetermined threshold, transmission of electric power may be carried out under power transmission control such that the temperature of the a foreign object is not more than a predetermined threshold. Such control enables continuation of the power transmission while securing the safety. Specifically, electric power may be transmitted intermittently with predetermined time intervals using parameters which are determined based on data experimentally or analytically obtained in advance. Alternatively, transmission of electric power may be carried out after the electric power has been reduced at a predetermined reduction rate (power-limited mode). Still alternatively, the electric power to be transmitted may be adjusted while monitoring the temperature with the use of a temperature sensor placed near the power transmitting coil **510**.

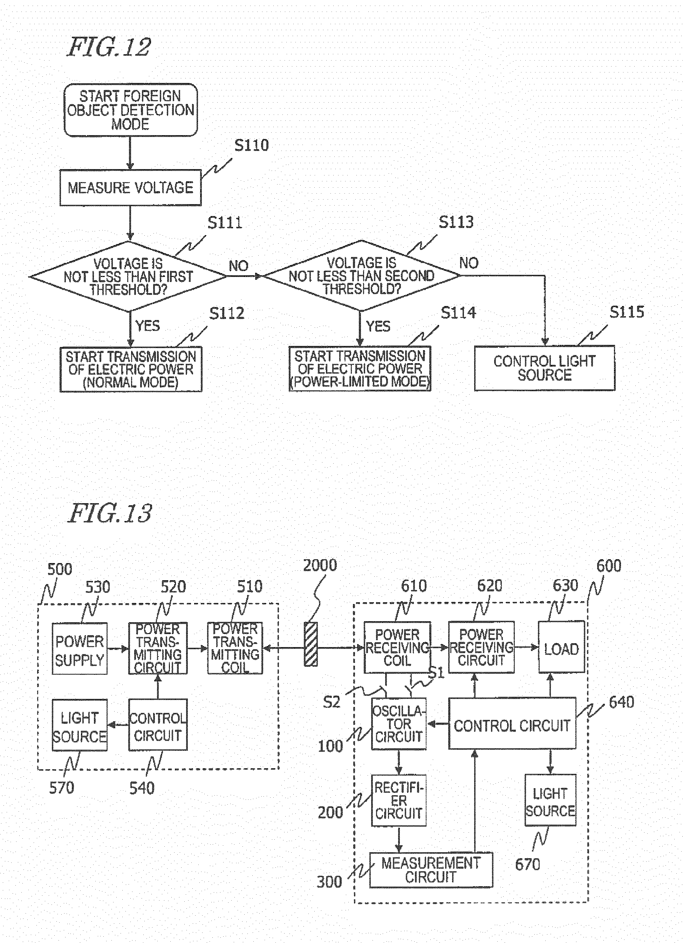

FIG. **12** is a flowchart showing an example of the process of the power transmitter **500** of the present embodiment.

When the foreign object detection mode is started, firstly at step S110, the measurement circuit **300** measures the voltage output from the rectifier circuit **200**. Then, at step S111, the measurement circuit **300** determines whether or not the measured voltage is not less than the first threshold. If the measured voltage is not less than the first threshold, no foreign object is present. Then, the process proceeds to step S112, and transmission of electric power is started (normal power transmission). If the measured voltage is less than the first threshold, it is assumed that a foreign object is present. Then, the process proceeds to step S113, and the measurement circuit **300** determines whether or not that voltage is not less than the second threshold. If the voltage is not less than the second threshold, the measurement circuit **300** determines that the a foreign object is so small that generation of heat is negligible and imparts the information about the determination to the power transmission control circuit **540**. Receiving that information, the power transmission control circuit **540** selects the above-described power-limited mode and starts transmission of electric power (step S114). At step S113, if the voltage is less than the second threshold, the measurement circuit **300** determines that a large foreign object is present and imparts the information about the determination to the power transmission control circuit **540**. Receiving that information, the power transmission control circuit **540** orders the light source **570** (e.g., LED) to flash, for example, thereby informing a user that a foreign object is present (step S115).

Note that, in wireless power transmission, electric power of several watts to several kilowatts, for example, is transmitted from the power transmitting coil **510** to the power receiving coil **610**. Therefore, if the operation transitions from the power transmission mode to the foreign object detection mode during the power transmission, there is a probability that accumulated energy in the coil flows into a circuit that is for detection of foreign objects, and the withstand voltage of the circuit that is for detection of foreign objects is exceeded so that a burnout can occur. In view of such, according to the present embodiment, the energy accumulated in the power transmitting coil **510** during wireless power transmission is released to the ground before the operation transitions to the foreign object detection mode. This arrangement enables to prevent a burnout of the circuit that is for detection of foreign objects. Specifically, when the operation is switched from the power transmission mode to the foreign object detection mode, among the inverters included in the power transmitting circuit 520, the switch of a switching element which is directly connected to the ground (e.g., MOSFET) is firstly turned ON. This enables the energy accumulated in the power transmitting coil 510 to be released to the ground. Then, the foreign object detection mode may be started after a predetermined time period has passed.

Note that, in the present embodiment, the power transmitting coil 510 is configured to also function as the coil for detection of foreign objects, although the present disclosure is not limited to such an example. The coil for transmission of electric power and the coil for detection of foreign objects may be realized by different coils.

(Embodiment 7)

FIG. **13** is a block diagram showing a general configuration of a wireless power transmission system according to Embodiment 7 of the present disclosure. The present embodiment is different from Embodiment 6 in that the power receiver **600** has a foreign object detector which includes an oscillator circuit **100**, a rectifier circuit **200**, and a measurement circuit **300**. The power receiver **600** of the present embodiment can operate in two modes, the power reception mode and the foreign object detection mode, and includes switches **S1**, **S2** placed between the power receiving coil **610** and the oscillator circuit **100** for switching between the power reception mode and the foreign object detection mode. In the present embodiment, the respective components of the power transmitter **500** and the power receiver **600** are the same as corresponding components of Embodiment 6. Note that, also in the present embodiment, a case where the foreign object detector of Embodiment 4 which has the rectifier circuit **200** is included is illustrated, although a foreign object detector which has no rectifier circuit may be included.

Such a configuration enables sharing of coil parts and provides an advantage that the size of the power receiver **600** can be reduced. Further, the power receiving coil **610** is also employed as the coil for detection of foreign objects, and therefore, there is an advantage that the state of placement of a foreign object lying under the power receiving coil **610** can be directly detected. Due to this arrangement, a request can be made to the power transmitter **500** side to adjust the power transmission frequency and the electric power to be transmitted (voltage or current) according to the voltage value detected by the measurement circuit **300**. Such a request can be made by, for example, a communication circuit included in the power receiving circuit **620**. For example, if the measurement circuit **300** determines that a foreign object is present, the power transmission control circuit **540** immediately stops, or does not start, transmission of electric power. In this case, charging is impossible, and the user's convenience is marred. In view of such, even if the criterial value that is the criterion for determination as to the presence/absence of a foreign object is not more than a predetermined threshold, transmission of electric power may be carried out under power transmission control such that the temperature of the a foreign object is not more than a predetermined threshold. Such control enables continuation of the power transmission while securing the safety. Specifically, electric power may be transmitted intermittently with predetermined time intervals using parameters which are determined based on data experimentally or analytically obtained in advance. Alternatively, transmission of electric power may be carried out after the electric power has been reduced at a predetermined reduction rate (power-limited mode). Still alternatively, the electric power to be transmitted may be adjusted while monitoring the temperature with the use of a temperature sensor placed near the power receiving coil **610**.

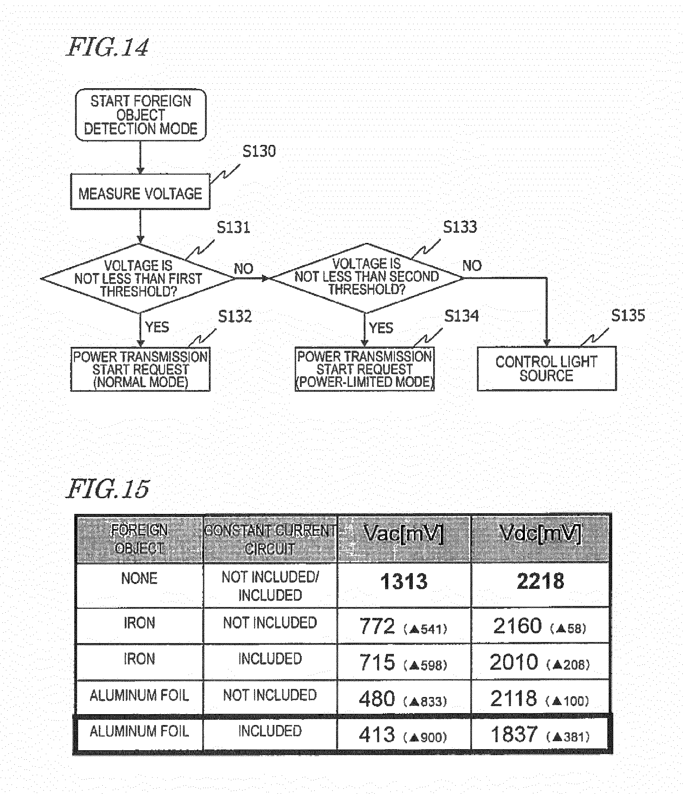

FIG. **14** is a flowchart showing an example of a process of the power receiver **600** in the present embodiment. When the foreign object detection mode is started, firstly at step 130, the measurement circuit **300** measures the voltage output from the rectifier circuit **200**. Then, at step S131, the measurement circuit **300** determines whether or not the measured voltage is not less than the first threshold. If the measured voltage is not less than the first threshold, no foreign object is present. Then, the process proceeds to step S132, and a request to start transmission of electric power is sent to the power transmitter **500** side (normal power transmission). If the measured voltage is less than the first threshold, it is assumed that a foreign object is present. Then, the process proceeds to step S133, and the measurement circuit **300** determines whether or not that voltage is not less than the second threshold. If the voltage is not less than the second threshold, the measurement circuit 300 determines that the a foreign object is so small that generation of heat is negligible and imparts the information about the determination (power transmission start request) to the power transmission control circuit **540** of the power transmitter **500** (step S134). Receiving the power transmission start request, the power transmission control circuit **540** selects the above-described power-limited mode and starts transmission of electric power. At step S133, if the voltage is less than the second threshold, the measurement circuit **300** determines that a large foreign object is present and imparts the information about the determination to the power reception control circuit **640**. Receiving that information, the power reception control circuit **640** orders the light source **670** (e.g., LED) to flash, for example, thereby informing a user that a foreign object is present (step S135).

Note that, in wireless power transmission, electric power of several watts to several kilowatts, for example, is transmitted from the power transmitting coil **510** to the power receiving coil **610**. Therefore, if the operation transitions from the power reception mode to the foreign object detection mode during the power transmission, there is a probability that accumulated energy in the coil flows into a circuit that is for detection of foreign objects, and the withstand voltage of the circuit that is for detection of foreign objects is exceeded so that a burnout can occur. In view of such, according to the present embodiment, the energy accumulated in the power receiving coil **610** during wireless power transmission is released to the ground before the operation transitions to the foreign object detection mode.

This arrangement enables to prevent a burnout of the circuit that is for detection of foreign objects. Specifically, in the case where the rectifier circuit included in the power receiving circuit **620** is a synchronous rectifier circuit, when the operation is switched from the power reception mode to the foreign object detection mode, one of the switching elements included in the power receiving circuit **620** which is directly connected to the ground is firstly turned ON. This enables the energy accumulated in the coil inside the power receiving coil **610** to be released to the ground. Then, the foreign object detection mode may be started after a predetermined time period has passed.

Note that, in the present embodiment, the power receiving coil **610** is configured to also function as the coil for detection of foreign objects, although the present disclosure is not limited to this example. The coil for transmission of electric power and the coil for detection of foreign objects may be realized by different coils.

(Example 1)

An example according to Embodiment 1 and Embodiment 2 of the present disclosure is described.

In FIG. **1** and FIG. **3**, a prototype of a foreign object detection circuit was produced for experiment, in which Vdd = 5 V, Lp = 6.5 uH, Cx = Cy = 33 nF, Rd = 270 Ω, and Rf = 1 MΩ. The measurement circuit **300** was an ADC at 2G samples/sec. A measured waveform was once stored in a memory before amplitude value Vac of the oscillation waveform and DC voltage Vdc were calculated using formulae (2) and (3). Two types of materials, iron and aluminum foil, were selected as foreign objects to be evaluated. Measured values of the oscillation waveform obtained when the a foreign object is present in a vicinity of the coil and when the a foreign object is distant from the coil (in the absence of a foreign object) were compared. The current value supplied from power supply Vdd when the a foreign object is not present in a vicinity of the coil was 7 mA. Therefore, the current limit value of the current limiting circuit **400** was set to 8 mA. The current limiting circuit **400** was configured to operate in the constant current mode if 8 mA is exceeded.

The evaluation results are shown in the table of FIG. **15**.

In the second column of the table for the constant current circuit, "NOT INCLUDED" corresponds to Embodiment 1, and "INCLUDED" corresponds to Embodiment 2. In the table, the numerical values in parentheses represent the difference between the voltage value obtained in the absence of a foreign object and the voltage value obtained in the presence of a foreign object. For example, in the case where the a foreign object to be evaluated was iron and the constant current circuit was not included, the difference in Vac was 1313-772 = 541 mV. This means that the amplitude of the AC voltage decreased by 541 mV due to the presence of a foreign object in a vicinity.

It is understood from the evaluation results that, irrespective of the material of the a foreign object, both amplitude Vac and DC voltage Vdc decrease when a metallic foreign object is present in a vicinity of the coil. It is also understood that, when the constant current circuit is included, the decrease of amplitude Vac and the decrease of DC voltage Vdc become greater. While in the conventional sensing methods only the variation in amplitude Vac of the AC voltage is mainly considered as the parameter to be detected, the variation of DC voltage Vdc can also be considered as the parameter to be detected in the present application in addition to the conventional parameter.

For example, in a configuration example of Embodiment 2 where the a foreign object to be evaluated was aluminum foil and the constant current circuit was included, the voltage decrease of the present application was 900 + 381 = 1281 mV, while the voltage decrease was 900 mV in the conventional methods. This means that the sensing sensitivity was improved about 42%.

(Example 2)

An example according to Embodiment 4 of the present disclosure is described.

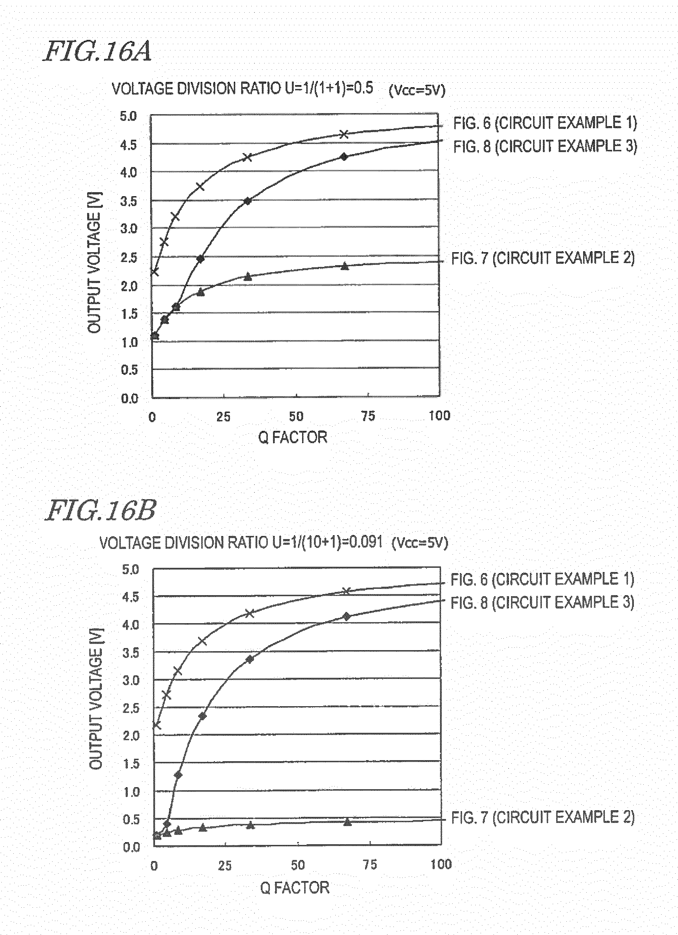

FIGS. 16A and 16B are graphs showing the relationship between the Q factor and the output voltage in the three circuit examples previously described with reference to FIGS. 6 to 8 in the section of Embodiment 4. With the parameters of Vdd = 5 V, C1 = 1 nF, Rf - 1 M$\Omega$, Rd = 470 $\Omega$, Cx = Cy = 27 nF, and Lp = 6.5 uH, the variation of resistance Rp which occurs when a foreign object is placed on the coil was simulated, where resistance Rp was varied in the range of Rp=25 to 5000 m$\Omega$ and the range of Q=0.6 to 134 was subjected to calculation. The two values for C2, C2 = 1 nF and C2 = 10 nF, were examined. The difference in output voltage Vout between the cases of different voltage division ratios, U = 0.5 and U = 0.091, was calculated using a circuit simulation. Note that the simulation results include the characteristics of forward voltage VF of the diode.

First, the results shown in FIG. 16A for the case of voltage division ratio U = 0.5 with C1 = 1 nF and C2 = 1 nF are examined. It is seen that, in the circuit configuration of FIG. 6 (first circuit example), the lower limit voltage is Vdd/2 $\approx$ 2.5 V, and in the circuit configuration of FIG. 7 (second circuit example), the lower limit voltage is U$\times$Vdd/2 $\approx$ 1.2 V. If the measurement circuit 300 is capable of measuring in the range of 0$\leq$Vout<5 V, the circuit configurations shown in FIG. 6 and FIG. 7 can utilize the sensing ability only in 50% of that range. On the other hand, it can be seen that, in the circuit configuration of FIG. 8 (third circuit example), the lower limit voltage is U$\times$Vdd/2 $\approx$ 1.2 V as in circuit example 2, and the upper limit voltage becomes closer to the upper limit voltage Vdd=5 V achieved in circuit example 1 as the Q factor increases. Therefore, as illustrated in the section of Embodiment 4, it is expected that decreasing voltage division ratio U enables to decrease the lower limit voltage and to increase the dynamic range of sensing.

Based on this concept, the results shown in FIG. **16B** for the case of voltage division ratio U = 0.091 with C1 = 1 nF and C2 = 10 nF were examined. It can be seen that, in circuit example 2 and circuit example 3, the lower limit voltage decreased to U$\times$Vdd/2 $\approx$ 0.2 V. As a result, it was verified that, in circuit example 3, in the range of Q $\approx$ 0 to 134, measurement is possible within the range of Vout $\approx$ 0 to 5 V, and a further improvement in sensitivity can be achieved as compared with the circuit configurations of circuit examples 1 and 2.

In the foregoing sections of this specification, the description has focused on metal detection. In an embodiment of the present invention, human body detection is also possible. Specifically, when a human body (=dielectric) is present in a vicinity of the coil, the impedance of the coil varies, and the Q factor also varies. As the Q factor varies, the AC component and the DC component of the oscillation waveform vary as previously illustrated. Therefore, these variations may be detected by the measurement circuit 200. Based on the detection results, the power transmission control circuit can add a power transmission stop process and a power reduction process. This arrangement enables detection of a human body which is present in a vicinity of the coil. The risk of exposure of a human body to electromagnetic waves can be avoided.

Note that the numerical values and circuit configurations presented in this specification are merely exemplary. The invention of the present application is not limited to those numerical values and circuit configurations. The present application only provides illustration of examples of an oscillator circuit which operates at a single frequency for the purpose of focusing the description on the concept of the present invention. However, extension to "multi-frequency oscillator circuits" which further include capacitors with switches or inductors with switches, and which are capable of dynamically changing the resonant frequency of the LC resonant circuit by turning on and off these switches, is easily achieved. These can employ existing switching methods. Also, the detection accuracy of the foreign object detector of the present disclosure can be further improved by measuring the voltage at a plurality of frequencies and determining the variation of the voltage for each of the frequencies.

## INDUSTRIAL APPLICABILITY

A foreign object detector and a wireless power transmission system of the present disclosure are widely applicable to uses for charging of, or for supply of electric power to, for example, electric vehicles, AV devices, batteries, medical devices, etc. According to the embodiments of the present disclosure, a foreign object, such as a metallic object or human body, which is present in a vicinity of a coil can be detected with high sensitivity, and abnormal heat generation of a metallic object and the risk of exposure of a human body can be avoided.

REFERENCE SIGNS LIST

| | |
|---|---|
| 100 | oscillator circuit |
| 110 | coil |
| 150 | electric circuit |
| 200, 200a | rectifier circuit |
| 300 | measurement circuit |
| 400 | current limiting circuit |
| **500** | power transmitter |
| **510** | power transmitting coil |
| **520** | power transmitting circuit |
| **530** | power supply |
| **540** | power transmission control circuit |
| **570** | light source |
| **600** | power receiver |
| **610** | power receiving coil |
| **620** | power receiving circuit |
| **630** | load |
| **640** | power reception control circuit |
| **670** | light source |
| **Lp** | inductance of coil |
| **Rp** | resistance of coil |
| **Rd** | damping resistance |
| **Cx** | resonant capacitor |
| **Cy** | resonant capacitor |
| **C1** | voltage-dividing capacitor |
| **C2** | smoothing capacitor |
| **D1** | rectifying element |
| **D2** | rectifying element |
| **INV** | inverter |
| **S1, S2** | switch |

**Claims**

1. A foreign object detector, comprising:

   an oscillator circuit (100) having a coil (110) and a first (Cx) and second resonant capacitor (Cy), the oscillator circuit (100) being configured to output a voltage which includes an AC component and a DC component, the AC component having a positive cycle and a negative cycle; and
   an electric circuit (150) configured to detect a variation of the AC component and a variation of the DC component in the voltage output from the oscillator circuit (100) when a foreign object approaches the coil (110), wherein

   one electrode of the first resonant capacitor (Cx) is connected to one terminal of the coil (110) and an output terminal (X) of the oscillator circuit (100),
   one electrode of the second resonant capacitor (Cy) is connected to the other terminal of the coil (110),
   the other electrode of the first resonant capacitor (Cx) is grounded, and
   the other electrode of the second resonant capacitor (Cy) is grounded;
   **characterized in that**
   the first (Cx) and the second resonant capacitors (Cy) have a different capacitance from each other, and
   the electric circuit (150) includes a rectifier circuit (200) configured to rectify the voltage output from the output terminal (X) of the oscillator circuit (100) and to output the rectified voltage, and the rectifier circuit (200) includes

      a first rectifier element (D1) for rectifying a voltage of the positive cycle,
      a first capacitor (C1) for reducing the DC component, and

a second rectifier element (D2) for rectifying a voltage of the negative cycle which is smaller than zero due to reduction of the DC component.

2.  The foreign object detector of claim 1, wherein

    the rectifier circuit further includes a second capacitor (C2) for smoothing a voltage output from the first rectifier element, and
    a voltage division ratio between the first capacitor (C1) and the second capacitor (C2), U, satisfies the relationship of $0<U\leq0.5$.

3.  The foreign object detector of any of claims 1 to 2, wherein
    the electric circuit (150) further includes a measurement circuit (300) configured to directly or indirectly measure a voltage output from the oscillator circuit.

4.  The foreign object detector of claim 1 or 2, wherein
    the electric circuit further includes a measurement circuit configured to measure the voltage output from the rectifier circuit.

5.  The foreign object detector of claim 3 or 4, wherein

    the oscillator circuit further includes a resistance Rd which is arranged so as to decrease the voltage output from the oscillator circuit, and
    the resistance Rd is set such that, when a foreign object is sufficiently distant from the coil, a voltage input to the measurement circuit is within a measurable range of the measurement circuit and, when the foreign object which is larger than the coil is in close contact with the coil, the voltage is not less than a lower limit of the measurable range.

6.  The foreign object detector of any of claims 3 to 5, wherein
    the measurement circuit is configured to output information indicating that the foreign object is present when a difference between a voltage input to the measurement circuit and a predetermined reference voltage is not less than a predetermined threshold.

7.  The foreign object detector of any of claims 1 to 6, wherein

    the first resonant capacitor has capacitance Cx and the second resonant capacitor has capacitance Cy = aCx, and $\alpha$ is set to a value within the range of $1\leq\alpha<100$.

8.  The foreign object detector of any of claims 1 to 6, wherein

    the first resonant capacitor has capacitance Cx and the second resonant capacitor has capacitance Cy = aCx, and $\alpha$ is set to a value within the range of $0.01\leq\alpha<1$.

9.  The foreign object detector of any of claims 1 to 8, wherein

    the coil is configured to also function as a power transmitting coil for transmitting electric power wirelessly,
    the foreign object detector further includes a switch for switching an electrical connection between the coil and the oscillator circuit, and
    the switch is configured to electrically connect the coil to the oscillator circuit in a foreign object detection mode and to electrically separate the coil from the oscillator circuit in a power transmission mode.

10. The foreign object detector of any of claims 1 to 8, wherein

    the coil is configured to also function as a power receiving coil for receiving electric power by wireless,
    the foreign object detector further includes a switch for switching an electrical connection between the coil and the oscillator circuit, and
    the switch is configured to electrically connect the coil to the oscillator circuit in a foreign object detection mode and to electrically separate the coil from the oscillator circuit in a power transmission mode.

**11.** A power transmitter for transmitting electric power by wireless, comprising:

the foreign object detector of any of claims 1 to 9; and
a control circuit configured to determine a power transmission frequency and a power transmission voltage according to a detection result from the foreign object detector.

**12.** A power receiver for receiving electric power transmitted by wireless from a power transmitter, comprising:

the foreign object detector of any of claims 1 to 8 and 10; and
a control circuit configured to generate information for power transmission control according to a detection result from the foreign object detector and outputs the generated information.

**13.** A wireless power transmission system, comprising:

a power transmitter configured to transmit electric power by wireless; and
a power receiver configured to receive the electric power transmitted from the power transmitter,
wherein the power transmitter is the power transmitter of claim 11, and/or wherein the power receiver is the power receiver of claim 12.

**Patentansprüche**

**1.** Ein Fremdkörperdetektor, umfassend:

einen Oszillatorschaltkreis (100) mit einer Spule (110) und einem ersten (Cx) und einem zweiten Resonanzkondensator (Cy), wobei der Oszillatorschaltkreis (100) konfiguriert ist, eine Spannung auszugeben, die eine AC-Komponente und eine DC-Komponente enthält, wobei die AC-Komponente einen positiven Zyklus und einen negativen Zyklus hat; und
einen elektrischen Schaltkreis (150), der konfiguriert ist, eine Änderung der AC-Komponente und eine Änderung der DC-Komponente in der von dem Oszillatorschaltkreis (100) ausgegebenen Spannung zu erfassen, wenn sich ein Fremdkörper der Spule (110) nähert, wobei

eine Elektrode des ersten Resonanzkondensators (Cx) mit einem Anschluss der Spule (110) und einem Ausgangsanschluss (X) des Oszillatorschaltkreises (100) verbunden ist,
eine Elektrode des zweiten Resonanzkondensators (Cy) mit dem anderen Anschluss der Spule (110) verbunden ist,

die andere Elektrode des ersten Resonanzkondensators (Cx) geerdet ist, und
die andere Elektrode des zweiten Resonanzkondensators (Cy) geerdet ist,
**dadurch gekennzeichnet, dass**
der erste (Cx) und der zweite Resonanzkondensator (Cy) eine voneinander verschiedene Kapazität aufweisen, und
der elektrische Schaltkreis (150) einen Gleichrichterschaltkreis (200) aufweist, der konfiguriert, die vom Ausgangsanschluss (X) des Oszillatorschaltkreises (100) ausgegebene Spannung gleichzurichten und die gleichgerichtete Spannung auszugeben, und der Gleichrichterschaltkreis (200) aufweist

ein erstes Gleichrichterelement (D1) zum Gleichrichten einer Spannung des positiven Zyklus,
einen ersten Kondensator (C1) zum Reduzieren der DC-Komponente, und
ein zweites Gleichrichterelement (D2) zum Gleichrichten einer Spannung des negativen Zyklus, die aufgrund Reduzierung der DC-Komponente kleiner als Null ist.

**2.** Der Fremdkörperdetektor nach Anspruch 1, wobei

der Gleichrichterschaltkreis ferner einen zweiten Kondensator (C2) zum Glätten einer von dem ersten Gleichrichterelement ausgegebenen Spannung aufweist, und
ein Spannungsteilungsverhältnis zwischen dem ersten Kondensator (C1) und dem zweiten Kondensator (C2), U, die Beziehung $0 < U \leq 0.5$ erfüllt.

**3.** Der Fremdkörperdetektor nach einem der Ansprüche 1 bis 2, wobei
der elektrische Schaltkreis (150) ferner einen Messschaltkreis (300) aufweist, der konfiguriert ist, eine von dem Oszillatorschaltkreis ausgegebene Spannung direkt oder indirekt zu messen.

**4.** Der Fremdkörperdetektor nach Anspruch 1 oder 2, wobei
der elektrische Schaltkreis ferner einen Messschaltkreis (300) umfasst, der konfiguriert ist, die von dem Gleichrichterschaltkreis ausgegebene Spannung zu messen.

**5.** Der Fremdkörperdetektor nach Anspruch 3 oder 4, wobei

der Oszillatorschaltkreis ferner einen Widerstand Rd aufweist, der so angeordnet ist, dass er die vom Oszillatorschaltkreis ausgegebene Spannung verringert, und
der Widerstand Rd so gesetzt ist, dass, wenn ein Fremdkörper ausreichend weit von der Spule entfernt ist, eine in den Messschaltkreis eingegebene Spannung innerhalb eines messbaren Bereichs des Messschaltkreises ist und, wenn der Fremdkörper, der größer als die Spule ist, in engem Kontakt mit der Spule ist, die Spannung nicht kleiner als eine untere Grenze des messbaren Bereichs ist.

**6.** Der Fremdkörperdetektor nach einem der Ansprüche 3 bis 5, wobei
der Messschaltkreis konfiguriert ist, Information auszugeben, die anzeigt, dass der Fremdkörper vorhanden ist, wenn eine Differenz zwischen einer in den Messschaltkreis eingegebenen Spannung und einer vorbestimmten Referenzspannung nicht kleiner als ein vorbestimmter Schwellwert ist.

**7.** Der Fremdkörperdetektor nach einem der Ansprüche 1 bis 6, wobei

der erste Resonanzkondensator Kapazität Cx hat und der zweite Resonanzkondensator Kapazität Cy = $\alpha$Cx hat, und
$\alpha$ auf einen Wert innerhalb des Bereichs $1 \leq \alpha < 100$ gesetzt ist.

**8.** Der Fremdkörperdetektor nach einem der Ansprüche 1 bis 6, wobei

der erste Resonanzkondensator Kapazität Cx hat und der zweite Resonanzkondensator Kapazität Cy = $\alpha$Cx hat, und
$\alpha$ auf einen Wert innerhalb des Bereichs $0.01 \leq \alpha < 1$ gesetzt ist.

**9.** Der Fremdkörperdetektor nach einem der Ansprüche 1 bis 8, wobei

die Spule konfiguriert ist, auch als Energieübertragungsspule zum drahtlosen Übertragen von elektrische Energie zu funktionieren,
der Fremdkörperdetektor ferner einen Schalter zum Schalten einer elektrischen Verbindung zwischen der Spule und dem Oszillatorschaltkreis aufweist, und
der Schalter konfiguriert ist, die Spule mit dem Oszillatorschaltkreis in einem Fremdkörperdetektionsmodus elektrisch zu verbinden und die Spule von dem Oszillatorschaltkreis in einem Energieübertragungsmodus elektrisch zu trennen.

**10.** Der Fremdkörperdetektor nach einem der Ansprüche 1 bis 8, wobei

die Spule konfiguriert ist, auch als Energieempfangsspule zum drahtlosen Empfangen von elektrischer Energie zu funktionieren,
der Fremdkörperdetektor ferner einen Schalter zum Schalten einer elektrischen Verbindung zwischen der Spule und dem Oszillatorschaltkreis aufweist, und
der Schalter konfiguriert ist, die Spule mit dem Oszillatorschaltkreis in einem Fremdkörperdetektionsmodus elektrisch zu verbinden und die Spule von dem Oszillatorschaltkreis in einem Energieübertragungsmodus elektrisch zu trennen.

**11.** Ein Energieüberträger zum drahtlosen Übertragen von elektrischer Energie, umfassend:

den Fremdkörperdetektor nach einem der Ansprüche 1 bis 9; und
einen Steuerungsschaltkreis, der konfiguriert ist, eine Energieübertragungsfrequenz und eine Energieübertragungsspannung entsprechend einem Erfassungsergebnis vom Fremdkörperdetektors zu bestimmen.

12. Ein Energieempfänger zum Empfangen von elektrischer Energie, die drahtlos von einem Energieüberträger übertragen wird, umfassend:

den Fremdkörperdetektor nach einem der Ansprüche 1 bis 8 und 10; und
einen Steuerungsschaltkreis, der konfiguriert ist, Information zur Energieübertragungsteuerung entsprechend einem Erfassungsergebnis vom Fremdkörperdetektors zu erzeugen und die erzeugte Information ausgibt.

13. Ein drahtloses Energieübertragungssystem, umfassend:

einen Energieüberträger, der konfiguriert ist, elektrische Energie drahtlos zu übertragen; und
einen Energieempfänger, der konfiguriert ist, die vom Energieüberträger übertragene elektrische Energie zu empfangen,
wobei der Energieüberträger der Energieüberträger nach Anspruch 11 ist, und/oder wobei der Energieempfänger der Energieempfänger nach Anspruch 12 ist.


**Revendications**

1. Détecteur d'objet étranger comprenant :

un circuit oscillateur (100) comportant une bobine (110), un premier (Cx) et un second (Cy) condensateurs résonnants, le circuit oscillateur (100) étant configuré pour délivrer une tension qui inclut une composante alternative et une composante continue, la composante alternative présentant un cycle positif et un cycle négatif, et
un circuit électrique (150) configuré pour détecter une variation de la composante alternative et une variation de la composante continue de la tension en sortie du circuit oscillateur (100) lorsqu'un objet étranger se rapproche de la bobine (110), dans lequel :

une première électrode du premier condensateur résonnant (Cx) est reliée à une première borne de la bobine (110) et à une borne de sortie (X) du circuit oscillateur (100),
une première électrode du second condensateur résonnant (Cy) est reliée à l'autre borne de la bobine (110),
l'autre électrode du premier condensateur résonnant (Cx) est mise à la masse, et
l'autre électrode du second condensateur résonnant (Cy) est mise à la masse,

**caractérisé en ce que** :

le premier (Cx) et le second (Cy) condensateurs résonnants présentent des capacités différentes, et
le circuit électrique (150) inclut un circuit redresseur (200) configuré pour redresser la tension en sortie de la borne de sortie (X) du circuit oscillateur (100) et pour délivrer en sortie la tension redressée, et le circuit redresseur (200) comprend :

un premier élément redresseur (D1) destiné à redresser la tension du cycle positif,
un premier condensateur (C1) destiné à réduire la composante continue, et
un second élément redresseur (D2) destiné à redresser la tension du cycle négatif qui est inférieure à zéro en raison de la réduction de la composante continue.

2. Détecteur d'objet étranger selon la revendication 1, dans lequel :

le circuit redresseur inclut en outre un second condensateur (C2) destinée à lisser la tension en sortie du premier élément redresseur, et
le rapport de division de tensions entre le premier condensateur (C1) et le second condensateur (C2) : U, satisfait à la relation $0 < U \leq 0,5$.

3. Détecteur d'objet étranger selon l'une quelconque des revendications 1 et 2, dans lequel :
le circuit électrique (150) inclut en outre un circuit de mesure (300) configuré pour mesurer directement ou indirectement la tension en sortie du circuit oscillateur.

**4.** Détecteur d'objet étranger selon la revendication 1 ou la revendication 2, dans lequel :
le circuit électrique inclut en outre un circuit de mesure configuré pour mesurer la tension en sortie du circuit redresseur.

**5.** Détecteur d'objet étranger selon la revendication 3 ou la revendication 4, dans lequel :

le circuit oscillateur inclut en outre une résistance Rd qui est disposée de sorte à diminuer la tension en sortie du circuit oscillateur, et
la résistance Rd est établie de sorte que, lorsqu'un objet étranger est suffisamment distant de la bobine, la tension en entrée du circuit de mesure se trouve à l'intérieur d'une plage mesurable du circuit de mesure, et, lorsque l'objet étranger, qui est plus grand que la bobine, se trouve en contact rapproché avec la bobine, la tension n'est pas inférieure à une limite inférieure de la plage mesurable.

**6.** Détecteur d'objet étranger selon l'une quelconque des revendications 3 à 5, dans lequel :
le circuit de mesure est configuré pour délivrer des informations indiquant que l'objet étranger est présent lorsque la différence entre la tension en entrée du circuit de mesure et une tension de référence prédéterminée n'est pas inférieure à un seuil prédéterminé.

**7.** Détecteur d'objet étranger selon l'une quelconque des revendications 1 à 6, dans lequel :

le premier condensateur résonnant présente une capacité Cx et le second condensateur résonnant présente une capacité $Cy = \alpha \cdot Cx$, et
a est établie à une valeur située dans la plage $1 \leq \alpha < 100$.

**8.** Détecteur d'objet étranger selon l'une quelconque des revendications 1 à 6, dans lequel :

le premier condensateur résonnant présente une capacité Cx et le second condensateur résonnant présente une capacité $Cy = \alpha \cdot Cx$, et
a est établie à une valeur située dans la plage $0,01 \leq \alpha < 1$.

**9.** Détecteur d'objet étranger selon l'une quelconque des revendications 1 à 8, dans lequel :

la bobine est configurée pour fonctionner également comme une bobine d'émission d'énergie permettant de transmettre de l'énergie électrique sans fil,
le détecteur d'objet étranger inclut en outre un commutateur destiné à basculer une connexion électrique entre la bobine et le circuit oscillateur, et
le commutateur est configuré pour connecter électriquement la bobine au circuit oscillateur dans un mode de détection d'objet étranger et pour séparer électriquement la bobine du circuit oscillateur dans un mode de transmission d'énergie.

**10.** Détecteur d'objet étranger selon l'une quelconque des revendications 1 à 8, dans lequel :

la bobine est configurée pour fonctionner également comme une bobine de réception d'énergie électrique sans fil,
le détecteur d'objet étranger inclut en outre un commutateur destiné à basculer une connexion électrique entre la bobine et le circuit oscillateur, et
le commutateur est configuré pour connecter électriquement la bobine au circuit oscillateur dans un mode de détection d'objet étranger et pour séparer électriquement la bobine du circuit oscillateur dans un mode de transmission d'énergie.

**11.** Émetteur d'énergie destiné à transmettre de l'énergie électrique sans fil, comprenant :

un détecteur d'objet étranger conforme à l'une quelconque des revendications 1 à 9, et
un circuit de commande configuré pour déterminer la fréquence de transmission d'énergie et la tension de transmission d'énergie en fonction d'un résultat de détection émis par le détecteur d'objet étranger.

**12.** Récepteur d'énergie destiné à recevoir de l'énergie électrique transmise sans fil depuis un émetteur d'énergie, comprenant :

un détecteur d'objet étranger conforme à l'une quelconque des revendications 1 à 8 et 10, et
un circuit de commande configuré pour générer des informations concernant la commande de transmission d'énergie en fonction d'un résultat de détection émis par le détecteur d'objet étranger, et pour délivrer en sortie les informations générées.

13. Système de transmission d'énergie sans fil comprenant :

un émetteur d'énergie configuré pour transmettre de l'énergie électrique sans fil, et
un récepteur d'énergie configuré pour recevoir l'énergie électrique transmise depuis l'émetteur d'énergie,
dans lequel l'émetteur d'énergie est l'émetteur d'énergie de la revendication 11 et/ou le récepteur d'énergie est le récepteur d'énergie de la revendication 12.

*FIG.1*

*FIG.2*

*FIG.3*

Vdd

CURRENT LIMITING CIRCUIT ─── 400

Vdd' →

─── 100

INV

Rf

110          Rd

Y    Rp   Lp    X    Vin

Cy          Cx

MEASURE-MENT CIRCUIT ─── 300 / 150

*FIG.4A*

A          B

*FIG.4B*

A  #1    #2  B

*FIG.4C*

#1

A          B

#2

*FIG.4D*

*FIG.4E*

*FIG.5*

## FIG.6

### (a)

POSITIVE CYCLE

### (b)

D1 CONDUCTING

FOREIGN OBJECT PRESENT IN VICINITY

### (c)

D1 CONDUCTING

## FIG.7

### (a)

POSITIVE CYCLE

### (b)

D1 CONDUCTING

FOREIGN OBJECT PRESENT IN VICINITY

### (c)

D1 CONDUCTING

*FIG.8*    (a)

(b)

(c)

*FIG.9*

*FIG.10*

*FIG.11*

*FIG.12*

```
┌─────────────────┐
│  START FOREIGN  │
│ OBJECT DETECTION│
│      MODE       │
└────────┬────────┘
         │
         ▼                                    S110
┌─────────────────┐
│ MEASURE VOLTAGE │
└────────┬────────┘
         │
         ▼                                                    S113
      S111
    ╱─────────╲          NO        ╱─────────╲          NO
   ╱ VOLTAGE IS ╲────────────────►╱ VOLTAGE IS ╲──────────────────┐
  ╱ NOT LESS THAN ╲              ╱ NOT LESS THAN  ╲                │
  ╲ FIRST THRESHOLD?╲           ╲ SECOND THRESHOLD?╲               │
    ╲─────────╱                    ╲─────────╱                     │
       │                              │                            │
      YES          S112             YES          S114              │        S115
       │                              │                            ▼
       ▼                              ▼                   ┌─────────────────┐
┌─────────────────┐          ┌─────────────────┐        │  CONTROL LIGHT  │
│START TRANSMISSION│          │START TRANSMISSION│        │     SOURCE      │
│OF ELECTRIC POWER │          │OF ELECTRIC POWER │        └─────────────────┘
│  (NORMAL MODE)   │          │(POWER-LIMITED MODE)│
└─────────────────┘          └─────────────────┘
```

*FIG.13*

```
         500
          ╲  530          520          510              2000        610          620          630      600
          ╲   ╲            ╲            ╲                 ╲           ╲            ╲            ╲    ╲
┌─────────────────────────────────────────────┐        ┌─┐  ┌──────────────────────────────────────────┐
│ ┌──────┐  ┌────────┐  ┌────────┐             │        │ │  │  ┌────────┐  ┌────────┐  ┌──────┐         │
│ │POWER │  │ POWER  │  │ POWER  │             │        │ │  │  │ POWER  │  │ POWER  │  │      │         │
│ │SUPPLY│─►│ TRANS- │─►│ TRANS- │◄────────────┼───────►│ │◄─┼─►│RECEIVING│─►│RECEIVING│─►│ LOAD │         │
│ │      │  │MITTING │  │MITTING │             │        │ │  │  │  COIL  │  │CIRCUIT │  │      │         │
│ └──────┘  │CIRCUIT │  │  COIL  │             │        └─┘  │  └────────┘  └────────┘  └──────┘         │
│           └────────┘  └────────┘             │             │       │  ╲S1        ▲        ▲       ╲640  │
│                ▲                             │          S2 │       │   ╲         │        │        ╲   │
│ ┌──────┐  ┌────────┐                         │           ╲ │       ▼             │        │            │
│ │LIGHT │  │CONTROL │                         │            ╲│  ┌────────┐  ┌──────────────┐             │
│ │SOURCE│◄─│CIRCUIT │                         │            │  │OSCILLA-│  │CONTROL CIRCUIT│             │
│ │      │  │        │                         │         100╱│  │  TOR   │◄─│              │             │
│ └──────┘  └────────┘                         │           ╱ │  │CIRCUIT │  └──────────────┘             │
│    ╲          ╲                              │             │  └────────┘     ▲       │                 │
└─────────────────────────────────────────────┘             │       │         │       ▼                 │
     570        540                                       200╱│       ▼         │  ┌──────┐              │
                                                           ╱  │  ┌────────┐     │  │LIGHT │              │
                                                              │  │RECTIFI-│     │  │SOURCE│              │
                                                              │  │  ER    │     │  │      │              │
                                                              │  │CIRCUIT │     │  └──────┘              │
                                                              │  └────────┘     │      ╲                 │
                                                           300╱│       │         │     670               │
                                                           ╱  │       ▼         │                        │
                                                              │  ┌──────────────┐                        │
                                                              │  │ MEASUREMENT  │                        │
                                                              │  │   CIRCUIT    │                        │
                                                              │  └──────────────┘                        │
                                                              └──────────────────────────────────────────┘
```

## FIG.14

START FOREIGN OBJECT DETECTION MODE

MEASURE VOLTAGE — S130

VOLTAGE IS NOT LESS THAN FIRST THRESHOLD? — S131

NO → VOLTAGE IS NOT LESS THAN SECOND THRESHOLD? — S133

YES → POWER TRANSMISSION START REQUEST (NORMAL MODE) — S132

YES → POWER TRANSMISSION START REQUEST (POWER-LIMITED MODE) — S134

NO → CONTROL LIGHT SOURCE — S135

## FIG.15

| FOREIGN OBJECT | CONSTANT CURRENT CIRCUIT | Vac[mV] | Vdc[mV] |
|---|---|---|---|
| NONE | NOT INCLUDED/ INCLUDED | 1313 | 2218 |
| IRON | NOT INCLUDED | 772 (▲541) | 2160 (▲58) |
| IRON | INCLUDED | 715 (▲598) | 2010 (▲208) |
| ALUMINUM FOIL | NOT INCLUDED | 480 (▲833) | 2118 (▲100) |
| ALUMINUM FOIL | INCLUDED | 413 (▲900) | 1837 (▲381) |

## FIG.16A

VOLTAGE DIVISION RATIO U=1/(1+1)=0.5   (Vcc=5V)

## FIG.16B

VOLTAGE DIVISION RATIO U=1/(10+1)=0.091   (Vcc=5V)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012244732 A
- US 4839602 A
- US 4678992 A
- US 6014022 A
- US 5180978 A
- JP 2012213270 A
- US 2014001881 A1